(19) Europäisches Patentamt
European Patent Office
Office européen des brevets

(11) **EP 4 446 881 A1**

(12) **EUROPEAN PATENT APPLICATION**
published in accordance with Art. 153(4) EPC

(43) Date of publication:
**16.10.2024 Bulletin 2024/42**

(21) Application number: **23739933.2**

(22) Date of filing: **06.01.2023**

(51) International Patent Classification (IPC):
**G06F 9/445** (2018.01)

(52) Cooperative Patent Classification (CPC):
**G06F 9/445; G06F 15/163; H04B 10/25;
H04L 47/12; H04L 67/10**

(86) International application number:
**PCT/CN2023/071103**

(87) International publication number:
**WO 2023/134590 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.01.2022 CN 202210041814
15.03.2022 CN 202210254471**

(71) Applicant: **Huawei Technologies Co., Ltd.
Shenzhen, Guangdong 518129 (CN)**

(72) Inventors:
• **HU, Tianchi
Shenzhen, Guangdong 518129 (CN)**
• **SHEN, Shengyu
Shenzhen, Guangdong 518129 (CN)**
• **LING, Wenkai
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **AGGREGATION COMMUNICATION METHOD AND DEVICE**

(57) A collective communication method and an apparatus, relating to the computing field, are used to reduce a quantity of data transmission times during data aggregation, so as to reduce a delay in a data aggregation process. The collective communication method may be applied to a computing cluster. The computing cluster may include a first node and a second node, where the first node includes a first processor and a second processor, the second node includes a third processor, and second processor is connected to the third processor. According to the collective communication method, the first processor determines that a processor that is in the first node and that is connected to the third processor in the second node is the second processor, and sends first data to the second processor. Correspondingly, the second processor receives the first data from the first processor, and transmits the first data to the third processor in the second node. Alternatively, the second processor may process the first data to obtain processed first data, and then transmits the processed first data to the third processor in the second node.

FIG. 15

**Description**

This application claims priorities to Chinese Patent Application No. 202210041814.4, filed with the China National Intellectual Property Administration on January 14, 2022 and entitled "DATA TRANSMISSION SYSTEM", and to Chinese Patent Application No. 202210254471.X, filed with the China National Intellectual Property Administration on March 15, 2022 and entitled "COLLECTIVE COMMUNICATION METHOD AND APPARATUS", both of which are incorporated herein by reference in their entireties.

**TECHNICAL FIELD**

This application relates to the computing field, and in particular, to a collective communication method and an apparatus.

**BACKGROUND**

Distributed computing is a process of decomposing data of an application into a plurality of parts and allocating these parts to a plurality of processors in a plurality of computing nodes in a computing cluster for computing. In this way, computing efficiency can be improved.

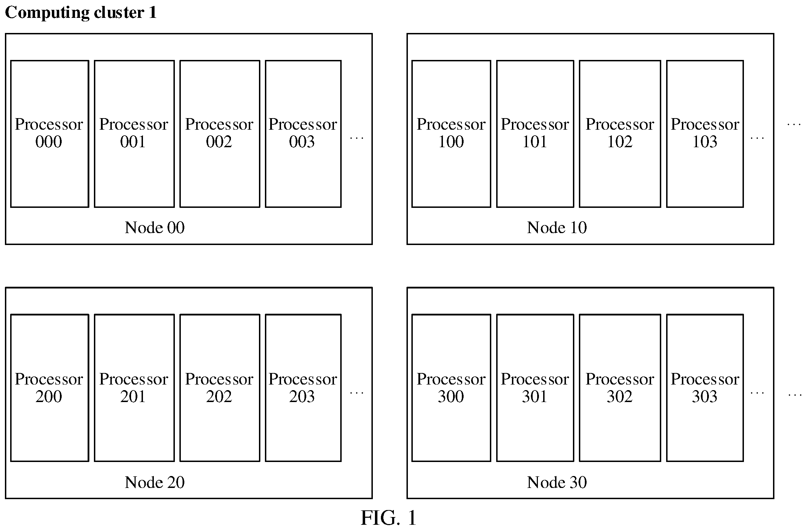

FIG. 1 is an architectural diagram of a computing cluster for distributed computing. The computing cluster includes a node 00 to a node 30, where the node 00 includes a processor 000 to a processor 003, the node 10 includes a processor 100 to a processor 103, and the like. In the computing cluster, each processor may be configured to perform partial computation, and aggregate data obtained through computation with data obtained through computation by another processor, to obtain a final computation result.

During data aggregation, first, processors in a node perform intra-node aggregation on data to obtain an intra-node aggregation result, and then each node performs inter-node aggregation on the intra-node aggregation result and another node. For example, with reference to the architecture in FIG. 1, the processor 000 to the processor 003 may first aggregate the 1st portions of data in the processor 000 to the processor 003 to the processor 000 in the node 00, to obtain an intra-node aggregation result of the 1st portions of data in the node 00. Then, the processor 000 transmits the intra-node aggregation result to the processor 100 in the node 10, to perform inter-node aggregation between the node 00 and the node 10. However, in this process, if the processor 000 is not directly connected to the processor 100, the processor 000 needs to determine, from the node 00, a processor (for example, the processor 001) connected to a processor in the node 10, and send the intra-node aggregation result to the processor 001, and then the processor 001 sends the intra-node aggregation result to the processor in the node 10. Further, the processor that is in the node 10 and that receives the intra-node aggregation result, for example, the processor 101, needs to further send the intra-node aggregation result to the processor 100.

In this way, data transmission occurs for a plurality of times, causing a relatively long delay in a data aggregation process.

SUMMARY

This application provides a collective communication method and an apparatus, to reduce a quantity of data transmission times during data aggregation, so as to reduce a delay in a data aggregation process.

According to a first aspect, this application provides a collective communication method. The collective communication method may be applied to a computing cluster. The computing cluster may include a first node and a second node, the first node includes a first processor and a second processor, the second node includes a third processor, and the second processor is connected to the third processor. According to the collective communication method, the first processor may first determine that a processor that is in the first node and that is connected to a processor in the second node is the second processor, and then the first processor determines that first data in the first processor needs to be transmitted to the second node. Subsequently, the first processor transmits the first data to the second processor. Correspondingly, the second processor receives the first data from the first processor, and transmits the first data to the third processor in the second node. Alternatively, in another example, the second processor may process (for example, aggregate) the first data to obtain processed first data, and then transmits the processed first data to the third processor in the second node.

In the foregoing technical solution, the first processor sends the first data to the second processor, and the second processor sends the first data or the processed first data to the third processor. This obviates a need to first perform intra-node aggregation to obtain an aggregation result and then send the aggregation result to the second processor that is in the first node and that is connected to the second node. This helps reduce unnecessary data transmission and speed up data aggregation.

In a possible implementation, the second processor and the third processor are connected via an optical cross-connect (optical cross-connect, OXC) device. For example, the second processor is connected to an optical port of the OXC device by using an optical port of the second processor, and the third processor is connected to another optical port of the OXC device by using an optical port of the third processor. The two optical ports of the OXC device may construct an optical channel in the OXC device.

In the foregoing technical solution, the second processor and the third processor establish an independent optical channel via the OXC device. Compared with an electrical channel, the optical channel may transmit more data, and avoid a line congestion problem that occurs during data transmission between the second processor and the third processor.

In a possible implementation, the first node includes a topology (or referred to as topological information) of a processor in the first node and another node, and the topology includes a connection relationship between the second processor and the third processor. The first processor may transmit the first data to the second processor based on the connection relationship between the second processor and the third processor in the topology.

In a possible implementation, the first node includes a topology between a processor in the first node and another node, the topology includes a one-to-one connection relationship between k processors in the first node and k processors in the second node, and k is an integer greater than 1. The first processor may use the k processors in the first node as k candidate processors based on the one-to-one connection relationship between the k processors in the first node and the k processors in the second node in the topology, select the second processor from the k candidate processors, and transmit the first data to the second processor. For example, the first processor may randomly select the second processor from the k candidate processors, or select the second processor according to a preset rule.

In a possible implementation, the k processors in the first node and the k processors in the second node construct k optical channels via the OXC device, where k is an integer greater than 1. Further, the second processor is one of the k processors in the first node, and the third processor is one of the k processors in the second node. When performing inter-node data transmission with the second node, the first node not only may send the first data or the processed first data to the third processor by using the second processor, but also may transmit data to each other by using another processor in the first node and a processor that is in the second node and that is connected to the another processor. In this way, the first node and the second node perform the inter-node data transmission through the k optical channels. This helps improve concurrency of the inter-node data transmission between nodes, to improve data aggregation efficiency.

In a possible implementation, data transmission between the first node and the second node is performed by using an allreduce interface in a message passing interface (message passing interface, MPI), the computing cluster includes M nodes, each node includes N processors, data in each processor is divided into N portions of data, and the first data is the $I^{th}$ portion of data in the N portions of data. That the first processor determines that first data in the first processor needs to be transmitted to the second node includes: The first processor performs a modulo operation on M by using I to obtain a remainder J; and the first processor determines the $J^{th}$ node in the computing cluster as the second node. N is an integer greater than 1, I is an integer greater than or equal to 1, and M is an integer greater than 1. In this way, the first processor directly sends the $I^{th}$ portion of data to the second processor connected to the $J^{th}$ node. This helps reduce unnecessary data transmission and speed up data aggregation.

In a possible implementation, when determining that the first data in the first processor needs to be transmitted to the second node, the first processor may specifically determine the first data based on original data in the first processor, a total quantity M of nodes in the computing cluster, and a total quantity N of processors in the nodes. Optionally, when M is greater than N, the first processor divides the original data in the first processor into M portions, so that the first processor selects the $I^{th}$ portion of data from the M portions obtained through division as the first data, where I is an integer in [1, M]. When M is less than or equal to N, the first processor divides the original data in the first processor into N portions, so that the first processor selects the $I^{th}$ portion of data from the N portions obtained through division as the first data, where I is an integer in [1, N].

Further, when M is less than or equal to N, there may be a case in which a plurality of portions of data in the first processor need to be aggregated to the $J^{th}$ node, that is, the first processor may send the plurality of portions of data to the second processor, for example, M = 3 and N = 5. The first portion of data and the fourth portion of data in the five portions of data obtained by the first processor through division need to be aggregated to the $1^{st}$ node, that is, the first processor may send the two portions of data to the second processor. This helps improve concurrency of data aggregation, and further speed up data aggregation.

In a possible implementation, data transmission between the first node and the second node is performed by using an alltoall interface in an MPI, the computing cluster includes M nodes, each node includes N processors, data in each processor is divided into M × N portions of data, and the first data is the $(I \times N)^{th}$ portion of data to the $((I + 1) \times N - 1)^{th}$ portion of data in the M × N portions of data. That the first processor determines that first data in the first processor needs to be transmitted to the second node includes: The first processor performs a modulo operation on M by using I to obtain a remainder J; and the first processor determines the $J^{th}$ node in the computing cluster as the second node.

N is an integer greater than 1, I is an integer greater than or equal to 1, and M is an integer greater than 1. In this way, the first processor directly sends the $((I - 1) \times N + 1)^{th}$ portion of data to the $(I \times N)^{th}$ portion of data to the second processor connected to the $J^{th}$ node. This helps reduce unnecessary data transmission and speed up data aggregation.

In a possible implementation, when determining that the first data in the first processor needs to be transmitted to the second node, the first processor may specifically determine the first data based on original data in the first processor, a total quantity M of nodes in the computing cluster, and a total quantity N of processors in the nodes. Optionally, the first processor may divide the original data in the first processor into M × N portions of data, so that the first processor selects the $((I - 1) \times N + 1)^{th}$ portion of data to the $(I \times N)^{th}$ portion of data from the M × N portions of data obtained through division as the first data.

In a possible implementation, the computing cluster implements data aggregation by using allgather or beast. Correspondingly, when determining that the first data in the first processor needs to be transmitted to the second node, the first processor may specifically determine the original data in the first processor as the first data, where the second node is any node other than the first node. In this way, the first processor may directly send the original data in the first processor to a processor that is in the first node and is connected to another node. This helps reduce unnecessary data transmission and speed up data aggregation.

In a possible implementation, a node (for example, the first node or the second node) in the computing cluster may be a server, or a server cluster including a plurality of servers. A processor (for example, the first processor, the second processor, or the third processor) in the node may be a graphics processing unit (graphics processing unit, GPU), a central processing unit (central processing unit, CPU), a neural network accelerator (neural-network processing unit, NPU), or another device with a processing function.

According to a second aspect, this application provides a collective communication method. The collective communication method may be applied to a computing node (for example, a first node) in a computing cluster. The computing node includes a first processor and a second processor, and the second processor is connected to a third processor in a second node. The collective communication method includes: The first processor determines that first data in the first processor needs to be transmitted to the second node. The first processor transmits the first data to the second processor. The second processor transmits the first data or processed first data to the third processor in the second node.

In a possible implementation, the second processor and the third processor are connected via an OXC device.

In a possible implementation, the first node includes a topology between a processor in the first node and another node, and the topology includes a connection relationship between the second processor and the third processor. That the first processor transmits the first data to the second processor includes: The first processor transmits the first data to the second processor based on the connection relationship between the second processor and the third processor in the topology.

In a possible implementation, the first node includes a topology between a processor in the first node and another node, the topology includes a one-to-one connection relationship between k processors in the first node and k processors in the second node, and k is an integer greater than 1. That the first processor transmits the first data to the second processor includes: The first processor uses the k processors in the first node as k candidate processors based on the one-to-one connection relationship between the k processors in the first node and the k processors in the second node in the topology. The first processor selects the second processor from the k candidate processors, and the first processor transmits the first data to the second processor.

In a possible implementation, data transmission between the first node and the second node is performed by using an allreduce interface in an MPI, the computing cluster includes M nodes, each node includes N processors, data in each processor is divided into N portions of data, and the first data is the $I^{th}$ portion of data in the N portions of data. That the first processor determines that first data in the first processor needs to be transmitted to the second node includes: The first processor performs a modulo operation on M by using I to obtain a remainder J; and the first processor determines the $J^{th}$ node in the computing cluster as the second node. N is an integer greater than 1, I is an integer greater than or equal to 1, and M is an integer greater than 1. In a possible implementation, the method further includes: The second processor aggregates the first data and the $I^{th}$ portion of data in each of other N - 1 processors in the first node.

In a possible implementation, data transmission between the first node and the second node is performed by using an alltoall interface in an MPI, the computing cluster includes M nodes, each node includes N processors, data in each processor is divided into M × N portions of data, and the first data is the $(I \times N)^{th}$ portion of data to the $((I + 1) \times N - 1)^{th}$ portion of data in the M × N portions of data. That the first processor determines that first data in the first processor needs to be transmitted to the second node includes: The first processor performs a modulo operation on M by using I to obtain a remainder J; and the first processor determines the $J^{th}$ node in the computing cluster as the second node. N is an integer greater than 1, I is an integer greater than or equal to 1, and M is an integer greater than 1.

According to a third aspect, this application provides a computing cluster, including a first node and a second node, where the first node includes a first processor and a second processor, and the second processor is connected to a third processor in the second node. The first processor is configured to: determine that first data in the first processor needs to be transmitted to the second node; and transmit the first data to the second processor. The second processor is configured to transmit the first data or processed first data to the third processor in the second node.

In a possible implementation, the second processor and the third processor are connected via an OXC device.

In a possible implementation, the first node includes a topology between a processor in the first node and another node, and the topology includes a connection relationship between the second processor and the third processor. When transmitting the first data to the second processor, the first processor is specifically configured to transmit the first data to the second processor based on the connection relationship between the second processor and the third processor in the topology.

In a possible implementation, the first node includes a topology between a processor in the first node and another node, the topology includes a one-to-one connection relationship between k processors in the first node and k processors in the second node, and k is an integer greater than 1. When transmitting the first data to the second processor, the first processor is specifically configured to: use the k processors in the first node as k candidate processors based on the one-to-one connection relationship between the k processors in the first node and the k processors in the second node in the topology; select the second processor from the k candidate processors; and transmit the first data to the second processor.

In a possible implementation, data transmission between the first node and the second node is performed by using an allreduce interface in an MPI, the computing cluster includes M nodes, each node includes N processors, data in each processor is divided into N portions of data, and the first data is the $I^{th}$ portion of data in the N portions of data. When determining that the first data in the first processor needs to be transmitted to the second node, the first processor is specifically configured to: perform a modulo operation on M by using I to obtain a remainder J; and determine the $J^{th}$ node in the computing cluster as the second node. N is an integer greater than 1, I is an integer greater than or equal to 1, and M is an integer greater than 1. In a possible implementation, the second processor is further configured to aggregate the first data and the $I^{th}$ portion of data in each of other N - 1 processors in the first node.

In a possible implementation, data transmission between the first node and the second node is performed by using an alltoall interface in a message passing interface MPI, the computing cluster includes M nodes, each node includes N processors, data in each processor is divided into M $\times$ N portions of data, and the first data is the $(I \times N)^{th}$ portion of data to the $((I + 1) \times N - 1)^{th}$ portion of data in the M $\times$ N portions of data. When determining that the first data in the first processor needs to be transmitted to the second node, the first processor is specifically configured to: perform a modulo operation on M by using I to obtain a remainder J; and determine the $J^{th}$ node in the computing cluster as the second node. N is an integer greater than 1, I is an integer greater than or equal to 1, and M is an integer greater than 1.

According to a fourth aspect, this application provides a computing node, including a first processor and a second processor, where the second processor is connected to a third processor in a second node in a computing cluster. The first processor is configured to: determine that first data in the first processor needs to be transmitted to the second node; and transmit the first data to the second processor. The second processor is configured to transmit the first data or processed first data to the third processor in the second node.

In a possible implementation, the second processor and the third processor are connected via an OXC device.

In a possible implementation, the first node includes a topology between a processor in the first node and another node, and the topology includes a connection relationship between the second processor and the third processor. When transmitting the first data to the second processor, the first processor is specifically configured to transmit the first data to the second processor based on the connection relationship between the second processor and the third processor in the topology.

In a possible implementation, the first node includes a topology between a processor in the first node and another node, the topology includes a one-to-one connection relationship between k processors in the first node and k processors in the second node, and k is an integer greater than 1. When transmitting the first data to the second processor, the first processor is specifically configured to: use the k processors in the first node as k candidate processors based on the one-to-one connection relationship between the k processors in the first node and the k processors in the second node in the topology; select the second processor from the k candidate processors; and transmit the first data to the second processor.

In a possible implementation, data transmission between the first node and the second node is performed by using an allreduce interface in an MPI, the computing cluster includes M nodes, each node includes N processors, data in each processor is divided into N portions of data, and the first data is the $I^{th}$ portion of data in the N portions of data. When determining that the first data in the first processor needs to be transmitted to the second node, the first processor is specifically configured to: perform a modulo operation on M by using I to obtain a remainder J; and determine the $J^{th}$ node in the computing cluster as the second node. N is an integer greater than 1, I is an integer greater than or equal to 1, and M is an integer greater than 1. In a possible implementation, the second processor is further configured to aggregate the first data and the $I^{th}$ portion of data in each of other N - 1 processors in the first node.

In a possible implementation, data transmission between the first node and the second node is performed by using an alltoall interface in an MPI, the computing cluster includes M nodes, each node includes N processors, data in each processor is divided into M × N portions of data, and the first data is the (I × N)$^{th}$ portion of data to the ((I + 1) × N - 1)$^{th}$ portion of data in the M × N portions of data. When determining that the first data in the first processor needs to be transmitted to the second node, the first processor is specifically configured to: perform a modulo operation on M by using I to obtain a remainder J; and determine the J$^{th}$ node in the computing cluster as the second node. N is an integer greater than 1, I is an integer greater than or equal to 1, and M is an integer greater than 1.

According to a fifth aspect, this application provides a computer-readable storage medium. The computer-readable storage medium stores a computer program or instructions. When the computer program or the instructions are executed by an apparatus, the method according to the second aspect or any possible implementation in the second aspect is implemented.

According to a sixth aspect, this application provides a computer program product. The computer program product includes a computer program or instructions. When the computer program or the instructions are executed by an apparatus, the method according to the second aspect or any possible implementation in the second aspect is implemented.

For technical effects that can be achieved in any one of the second aspect to the sixth aspect, refer to descriptions of beneficial effects in the first aspect. Details are not described herein again.

## BRIEF DESCRIPTION OF DRAWINGS

FIG. 1 is a schematic diagram of an architecture of a computing cluster;
FIG. 2 is a schematic diagram of a structure of an OXC device;
FIG. 3 is a schematic diagram of a structure of a neural network;
FIG. 4 is a schematic diagram of a hierarchical allreduce algorithm for collective communication;
FIG. 5 is a schematic diagram of a butterfly algorithm;
FIG. 6 is a schematic diagram of an architecture of a first computing cluster according to this application;
FIG. 7 is a schematic diagram of an architecture of a second computing cluster according to this application;
FIG. 8 is a schematic diagram of an equivalence relation of inter-node connection according to this application;
FIG. 9 is a schematic diagram of an architecture of a third computing cluster according to this application;
FIG. 10 is a schematic diagram of an architecture of a fourth computing cluster according to this application;
FIG. 11 is a schematic diagram of an architecture of a fifth computing cluster according to this application;
FIG. 12 is a schematic diagram of an architecture of a sixth computing cluster according to this application;
FIG. 13 is a schematic diagram of an architecture of a seventh computing cluster according to this application;
FIG. 14 is a schematic diagram of intra-node connection according to this application;
FIG. 15 is a schematic flowchart of a collective communication method according to this application;
FIG. 16 is a schematic flowchart of allreduce-based data aggregation according to this application;
FIG. 17 is a schematic diagram of ring algorithm-based intra-node aggregation according to this application;
FIG. 18 is a schematic diagram of another ring algorithm-based intra-node aggregation according to this application;
FIG. 19 is a schematic diagram of fullmesh algorithm-based intra-node aggregation according to this application;
FIG. 20 is a schematic diagram of first allreduce-based data aggregation according to this application;
FIG. 21 is a schematic diagram of allreduce-based inter-node data aggregation according to this application;
FIG. 22 is a schematic diagram of another allreduce-based inter-node data aggregation according to this application;
FIG. 23 is a schematic diagram of allreduce-based allgather aggregation according to this application;
FIG. 24 is a schematic diagram of second allreduce-based data aggregation according to this application;
FIG. 25 is a schematic diagram of third allreduce-based data aggregation according to this application;
FIG. 26 is a schematic diagram of fourth allreduce-based data aggregation according to this application;
FIG. 27 is a schematic diagram of time required for allreduce-based data transmission according to this application;
FIG. 28 is a schematic flowchart of alltoall-based data aggregation according to this application; and
FIG. 29A and FIG. 29B are a schematic diagram of alltoall-based data aggregation according to this application.

## DESCRIPTION OF EMBODIMENTS

To better explain embodiments of this application, related terms or technologies in this application are first explained as follows:

1. Optical cross-connect (optical cross-connect, OXC) device

The OXC device is a matrix optical switch, and two optical ports may be connected to each other by configuring

6

the OXC device, so that an optical signal can be transmitted between the two interconnected optical ports. Compared with electrical communication, optical communication can carry a larger volume of data and has a lower data transmission delay.

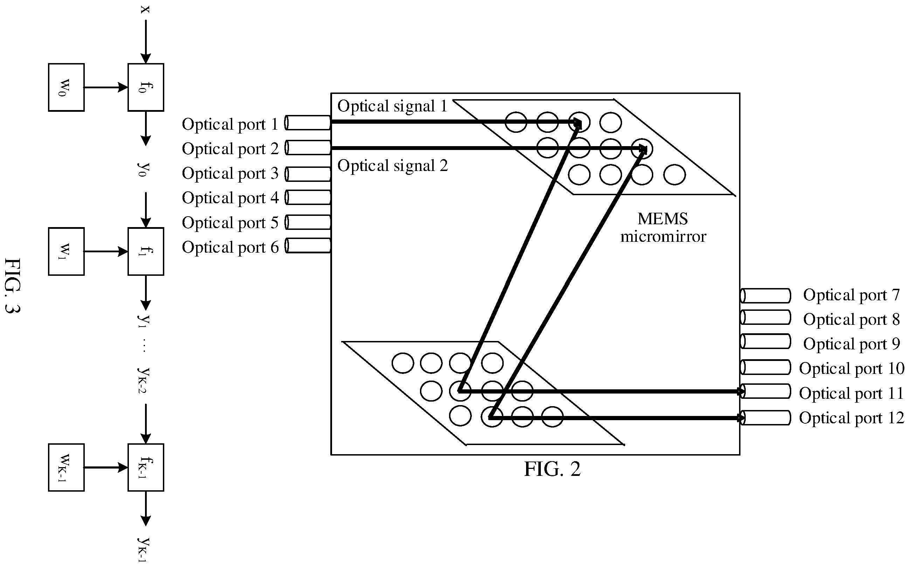

FIG. 2 is a schematic diagram of a structure of an OXC device. The OXC device is specifically a micro-electro-mechanical system (micro-electro-mechanical system, MEMS), and the MEMS may be configured to implement deflection of an optical signal. Specifically, the MEMS includes an MEMS micromirror and a plurality of optical ports. The plurality of optical ports may include an optical input port and an optical output port. The optical signal may be input by the optical input port, and is output from the corresponding optical output port after being reflected by the MEMS micromirror twice.

With reference to the example in FIG. 2, optical ports on the left side of the MEMS may be used as optical input ports, and may be represented as an optical port 1 to an optical port 6, and optical ports on the right side of the MEMS may be used as optical output ports, and may be represented as an optical port 7 to an optical port 12. An optical signal 1 may be input to the MEMS through the optical port 1, and the optical signal 1 is output through the optical port 11 after being reflected by the MEMS micromirror twice. An optical signal 2 may be input to the MEMS through the optical port 2, and the optical signal 2 is output through the optical port 12 after being reflected by the MEMS micromirror twice. In another example, optical ports on the right side of the MEMS may be used as optical input ports, optical ports on the left side of the MEMS may be used as optical output ports, or the like.

Further, the optical signal may be deflected by adjusting an angle of the MEMS micromirror, thereby implementing optical path switching. Still with reference to the example in FIG. 2, the optical signal 1 may be input through the optical port 1, and then output through the optical port 11. Further, the angle of the MEMS micromirror may be adjusted, so that the optical signal 1 is input from the optical port 1 and output from the optical port 10, thereby implementing optical path switching.

2. Neural network

The neural network (neural network, NN) is an algorithmic mathematical model that imitates behavioral features of a neural network of an animal and performs distributed parallel information processing. The objective of information processing can be achieved by adjusting an interconnection relationship between a large quantity of nodes in the neural network. The neural network has capabilities of self-learning and self-adaptation.

Specifically, the neural network may typically include a plurality of layers connected in a head-to-tail manner, for example, a convolutional layer, a fully connected layer (fully connected layer, FC), an activation layer, or a pooling layer. Each layer may be expressed as a function $y = f_w(x)$, where f describes what the function does, f is differentiable, w is a weight, x is an input, and y is an output.

FIG. 3 is a schematic diagram of a structure of a neural network. The neural network may include K layers connected in a head-to-tail manner, where K is an integer greater than or equal to 2. The first layer of the neural network may be expressed as a function $f_0$, where an input of $f_0$ is x, an output of $f_0$ is $y_0$, and a weight is $w_0$. The second layer of the neural network may be expressed as a function $f_1$, where an input of $f_1$ is $y_0$, an output of $f_1$ is $y_1$, a weight is $w_1$, and the like.

3. Model training

It is assumed that a data set $\{(x_0, l_0), ..., (x_{n-1}, l_{n-1})\}$ exists, where $x_0$, ..., and $x_{n-1}$ are n inputs, and corresponding $l_0$, ..., and $l_{n-1}$ are desired outputs of the n inputs respectively. Usually, the desired outputs are also called labels (labels). Each $(x_j, l_j)$ is called sample data.

An output of the neural network may be obtained by inputting any input (which may be represented as $x_j$) in the data set to the K layers of the neural network in FIG. 3. The output of the neural network may be represented as

$$y_{K-1}^j = f_{w_{K-1}}^{K-1}\left(\ldots f_{w_1}^1\left(x_j\right)\right)$$

.

An objective of model training is to solve $w_0$, ..., $w_{K-1}$, so that $y^j_{K-1}$ is closest to $l_j$ in a loss function L.

Further, a stochastic gradient descent (stochastic gradient descent, SGD) method may be used in the solving process. There are two types of SGD methods: a forward propagation method and a backward propagation method.

Forward propagation method: Any input (which may be represented as $x_j$) in a data set is input to the function $f_0$, so that the function $f_0$ outputs $y_0^j$. $y_0^j$ is input to the function $f_1$, so that the function $f_1$ outputs $y_1^j$. By analogy, outputs, namely $y_0^j, y_2^j, \dots, y_{K-1}^j$ , corresponding to the function $f_0$ to a function $f_{K-1}$ respectively are obtained. Then, a loss (loss) is calculated with reference to $l_j$ corresponding to $x_j$ and the loss function L.

Backward propagation method: A gradient $\Delta y_j$ of each layer of $y_j$ and a gradient $\Delta w_j$ of each layer of $w_j$ are calculated based on a chain rule. Specifically, for example, a gradient of the $K^{th}$ layer is determined based on the loss and $y_{K-1}$, and then a gradient $\Delta w_{K-1}$ of the $K^{th}$ layer is determined based on $\Delta y_{K-1}$ and $w_{K-1}$. By analogy, each layer of $\Delta y$ and $\Delta w$ is obtained, that is, $\Delta y_0$, $\Delta w_0$, ... , $\Delta y_{m-1}$, $\Delta w_{K-1}$ is obtained.

4. High-performance computing (high-performance computing, HPC) cluster refers to a parallel computing system that consists of a plurality of processors. By virtue of distributed computing, HPC can provide a computing capability that cannot be achieved by a single computer. HPC is mainly applied to large-scale complex scientific problems and massive data storage and processing. For example, HPC may be applied to scenarios such as scientific research, weather forecast, computing simulation, military research, biopharmaceuticals, gene sequencing, and image processing.

5. Collective communication (collective communication)

Distributed computing may include a plurality of scenarios, for example, the foregoing HPC scenarios and a large-scale model training scenario. The large-scale model training scenario is used as an example for description. A plurality of NPUs in a computing cluster may separately perform some or all of model training based on training data in each of the plurality of NPUs. In one iteration of model training, each NPU may aggregate intermediate data obtained by the NPU in this iteration with intermediate data obtained by another NPU.

Further, the intermediate data in each NPU may include one or more of the following obtained through local model training: a feature (feature or activation), a gradient, and a model parameter. The feature is, for example, a feature of training data obtained through model learning, the model parameter is, for example, a parameter of a function f in a neural network, and the gradient is, for example, a difference $\Delta w_j$ of $w_j$ generated during backward propagation.

In the following, intermediate data before each NPU performs collective communication may be referred to as original data in each NPU.

Collective communication algorithms may include allreduce, alltoall, allgather, bcast, and the like. These collective communication algorithms may be in a one-to-one correspondence with interfaces in a message passing interface (message passing interface, MPI). Each collective communication algorithm may be used to perform collective communication based on a corresponding interface. For example, allreduce corresponds to an allreduce interface in the MPI, and alltoall corresponds to an alltoall interface in the MPI.

Allreduce is used to aggregate original data in all NPUs, and each of the NPUs distributes the original data in the NPU to all other NPUs.

Alltoall may also be referred to as complete exchange. It may be considered that each NPU divides original data in the NPU into a same quantity of portions as a total quantity of NPUs, and data obtained through division by all the NPUs may form a data matrix. Alltoall is to perform a transpose operation on the data matrix. For example, an NPU sends the first portion of data in a plurality of portions of data obtained by dividing original data in the NPU to the 1st NPU, and sends the second portion of data in the plurality of portions of data to the 2nd NPU. Similarly, the NPU may receive data in the 1st NPU and use the data as the first portion of data; and receive data in the 2nd NPU and use the data as the second portion of data.

Allgather is used to gather the original data in all the NPUs and distribute an aggregation result to all the NPUs.

Beast is used to send the original data to all other NPUs to broadcast original data in a specific NPU.

Definitions of these collective communication algorithms may also be understood with reference to corresponding examples in the following embodiments.

The following uses allreduce as an example to describe the collective communication algorithm:

It should be noted that one node may include a plurality of NPUs, and bandwidth between the plurality of NPUs in a same node is usually higher than bandwidth between NPUs in different nodes. In this case, when a quantity of NPUs or a quantity of nodes is relatively large, to avoid performance degradation of an entire system caused by network congestion between nodes, hierarchical allreduce may be specifically used to aggregate data in the plurality of NPUs. The hierarchical allreduce may sequentially include first intra-node data aggregation, inter-node data aggregation, and second intra-node data aggregation.

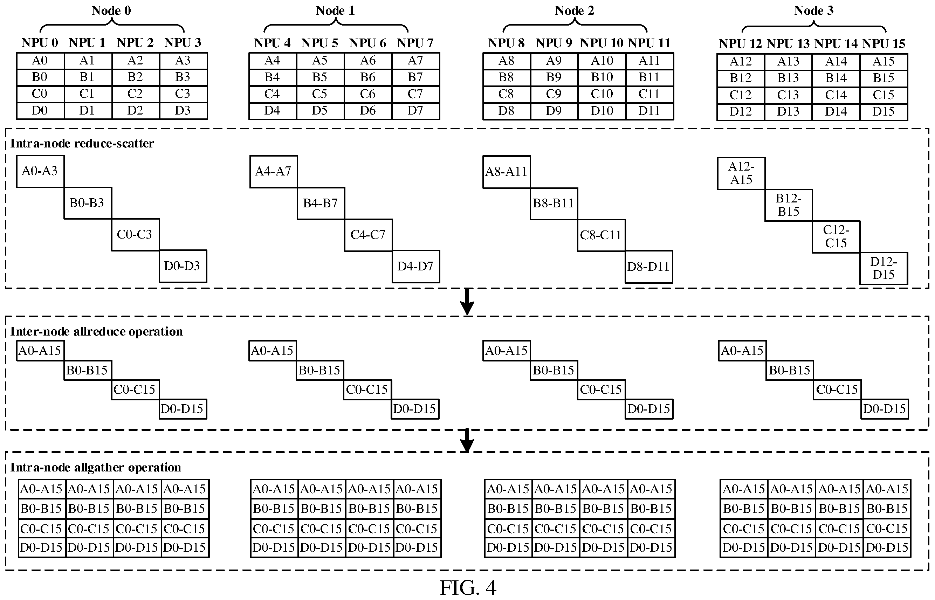

FIG. 4 describes the hierarchical allreduce. In the example in FIG. 4, the 1st node to the fourth node in the computing cluster may be respectively represented as a node 0 to a node 3. Each node may include four NPUs. For example, the 1st NPU to the 4th NPU in the node 0 may be respectively represented as an NPU 0 to an NPU 3. Original data in each NPU in a node may be divided into a same quantity of portions as a total quantity of NPUs in the node, that is, four portions of data. For example, original data in the NPU 0 may be divided into four portions of data: A0, B0, C0, and D0, original data in the NPU 1 may be divided into four portions of data: A1, B1, C1, and D1, original data in the NPU 2 may be divided into four portions of data: A2, B2, C2, and D2, and original data in the NPU 3 may be divided into four portions of data: A3, B3, C3, and D3. The same is the case with the node 1 to the node 3. For details, refer to FIG. 4.

The first intra-node data aggregation may also be referred to as an intra-node reduce-scatter operation. Refer to the following for the specific description.

For each of the four nodes, an NPU in each node may aggregate the I^th portion of data to the I^th NPU in the node. The following uses the node 0 as an example.

Each NPU in the NPU 0 to the NPU 3 may send the first portion of data in the NPU to the 1st NPU (that is, the NPU 0) in the node 0. Correspondingly, the NPU 0 obtains data A0, A1, A2, and A3, and aggregates the data to obtain A0 to A3.

Each NPU in the NPU 0 to the NPU 3 may send the second portion of data in the NPU to the 2nd NPU (that is, the NPU 1) in the node 0. Correspondingly, the NPU 1 obtains data B0, B1, B2, and B3, and aggregates the data to obtain B0 to B3.

Each NPU in the NPU 0 to the NPU 3 may send the third portion of data in the NPU to the 3rd NPU (that is, the NPU 2) in the node 0. Correspondingly, the NPU 2 obtains data C0, C1, C2, and C3, and aggregates the data to obtain C0 to C3.

Each NPU in the NPU 0 to the NPU 3 may send the fourth portion of data in the NPU to the 4th NPU (that is, the NPU 3) in the node 0. Correspondingly, the NPU 3 obtains data D0, D1, D2, and D3, and aggregates the data to obtain D0 to D3.

The same is the case with the node 1 to the node 3. For details, refer to the description of the node 0.

For a detailed aggregation result of the first intra-node data aggregation performed by each node, refer to FIG. 4.

Inter-node data aggregation may also be referred to as an inter-node allreduce operation, and details are as follows.

It should be noted that, in the node 0 to the node 3, NPUs corresponding to a same location may be considered to be located in a same plane. For example, the 1st NPU (that is, the NPU 0) in the node 0, the 1st NPU (that is, an NPU 4) in the node 1, the 1st NPU (that is, an NPU 8) in the node 2, and the 1st NPU (that is, an NPU 12) in the node 3 are located in a same plane, and the plane may be represented as a plane 0. For another example, the 2nd NPU (that is, the NPU 1) in the node 0, the 2nd NPU (that is, an NPU 5) in the node 1, the 2nd NPU (that is, an NPU 9) in the node 2, and the 2nd NPU (that is, an NPU 13) in the node 3 are located in a same plane, and the plane may be represented as a plane 2. By analogy, the NPUs in the node 0 to the node 3 may form four planes, that is, the plane 0 to a plane 3.

For any plane, inter-node data aggregation may be performed between nodes. The following uses the plane 0 including the NPU 0, the NPU 4, the NPU 8, and the NPU 12 as an example.

The NPU 0 obtains A0 to A3 in step 1, the NPU 4 obtains A4 to A7 in step 1, the NPU 8 obtains A8 to A11 in step 1, and the NPU 12 obtains A12 to A15 in step 1. The NPU 0, the NPU 4, the NPU 8, and the NPU 12 may perform inter-node data aggregation, so that each NPU includes A0 to A15.

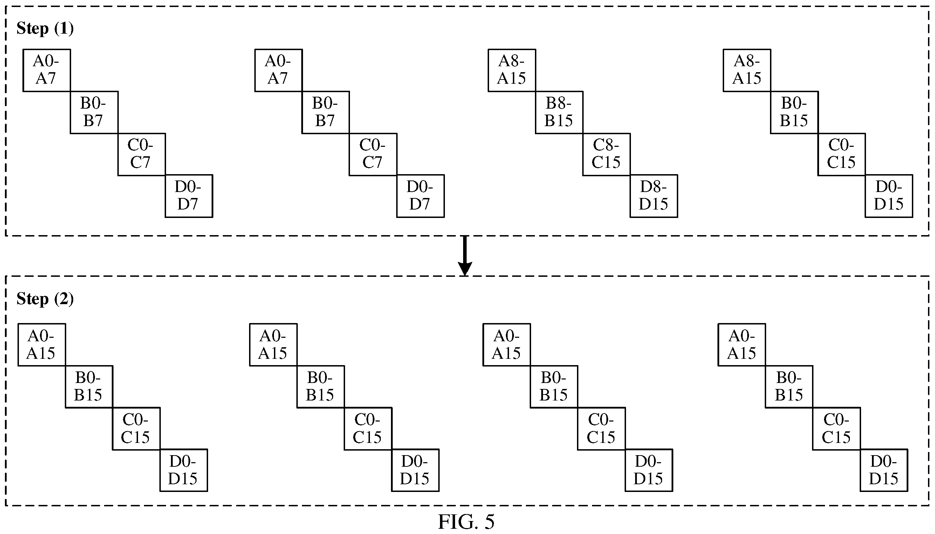

For example, the NPU 0, the NPU 4, the NPU 8, and the NPU 12 may implement inter-node data aggregation by using an algorithm such as a ring algorithm or a butterfly algorithm. FIG. 5 is an implementation of performing inter-node data aggregation by using the butterfly algorithm in step 2. The specific steps are as follows.

Step (1): The NPU 0 and the NPU 4 exchange data, so that both the NPU 0 and the NPU 4 may obtain A0 to A7; and the NPU 8 and the NPU 12 exchange data, so that both the NPU 8 and the NPU 12 may obtain A8 to A15.

Step (2): The NPU 0 and the NPU 8 exchange data, so that both the NPU 0 and the NPU 8 may obtain A0 to A15; and the NPU 4 and the NPU 12 exchange data, so that both the NPU 4 and the NPU 12 may obtain A0 to A15.

In this way, all of the NPU 0, the NPU 4, the NPU 8, and the NPU 12 may obtain A0 to A15.

Inter-node data aggregation corresponding to other planes is similar to the foregoing. For an obtained aggregation result, refer to FIG. 4 or FIG. 5.

The second intra-node data aggregation may also be referred to as an intra-node allgather operation. Refer to the following for the specific description.

The node 0 is used as an example. After obtaining A0 to A15, the NPU 0 may send A0 to A15 to each of other NPUs in this node, that is, the NPU 1 to the NPU 3.

After obtaining B0 to B15, the NPU 1 may send B0 to B15 to each of other NPUs in this node, that is, the NPU 0, the NPU 2, and the NPU 3.

After obtaining C0 to C15, the NPU 2 may send C0 to C15 to each of other NPUs in this node, that is, the NPU 0, the NPU 1, and the NPU 3.

After obtaining D0 to D15, the NPU 3 may send D0 to D15 to each of other NPUs in this node, that is, the NPU 0 to the NPU 2.

In this way, the NPU 0 to the NPU 3 in the node 0 all obtain A0 to A15, B0 to B 15, C0 to C15, and D0 to D15.

Similarly, the NPU 4 to an NPU 7 in the node 1, the NPU 8 to an NPU 11 in the node 2, and the NPU 12 to an NPU 15 in the node 3 may also obtain A0 to A15, B0 to B15, C0 to C15, and D0 to D15. For a final aggregation result, refer to FIG. 4. In this way, the entire data aggregation process is completed through the hierarchical allreduce.

The foregoing explains conventional technologies in this application. With reference to the foregoing conventional technologies, the following describes a computing cluster to which the method in this application is applicable.

The computing cluster includes M nodes, where a node may be a server or a server cluster including a plurality of servers, and M is an integer greater than 1.

Each node includes N processors, where N is an integer greater than 1, and a processor is, for example, a GPU, a CPU, or an NPU. That a worker (worker) runs on the processor may also be understood that a processor is equivalent to a worker. For ease of description, the following uses an NPU as an example for description. In this application, the NPU may be replaced with a CPU, a GPU, or another device with a function of processing, or the NPU may be replaced with a processor.

An optical channel may be established between any two of the M nodes. Compared with an electrical channel established by a switch, the optical channel established between the any two nodes can transmit a larger volume of data, help avoid a line congestion problem that occurs during data transmission between the two nodes, and help speed up data transmission.

In a specific implementation, optical connection between the any two nodes may be implemented by using an OXC device, as the OXC device establishes an optical channel between the two nodes. With reference to the OXC device shown in FIG. 2, an optical port of an NPU in one node is connected to the optical port 1, an optical port of an NPU in another node is connected to the optical port 11. The optical port 1 and the optical port 11 construct an optical channel in the OXC device.

Alternatively, it may be considered that the OXC device may be configured to construct an optical channel between two nodes, or the OXC device may be configured to construct an optical channel between an NPU in one node and an NPU in another node. The optical channel may also be referred to as an optical transmission channel or an optical path. The optical channel may be used to transmit data between an NPU in one node and an NPU in another node.

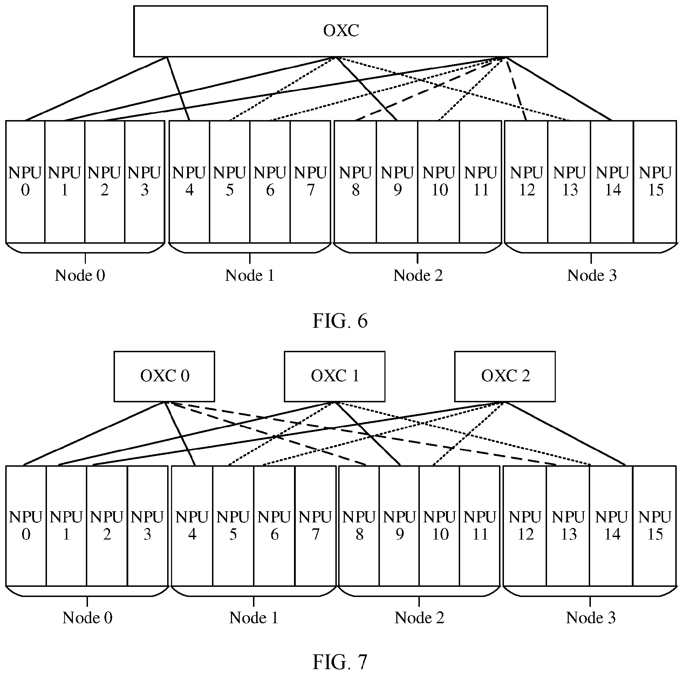

With reference to the example in FIG. 6, the system includes four nodes (that is, M = 4). The 1st node to the fourth node may be respectively represented as a node 0 to a node 3. For NPUs in the nodes, refer to FIG. 6. For example, the 1st NPU to the 4th NPU in the node 0 may be respectively represented as an NPU 0 to an NPU 3, and the 1st NPU to the 4th NPU in the node 1 may be respectively represented as an NPU 4 to an NPU 7. When connecting the node 0 to the node 1, the OXC device may specifically connect the NPU 0 in the node 0 to the NPU 4 in the node 1. When connecting the node 1 to the node 2, the OXC device may specifically connect the NPU 6 in the node 1 to the NPU 10 in the node 2.

Further, any two of the M nodes in the system may be connected via a plurality of OXC devices. For example, in a schematic diagram of an architecture of another computing cluster shown in FIG. 7, an NPU 0 in a node 0 is connected to an NPU 4 in a node 1 by using an OXC 0, and an NPU 6 in the node 1 is connected to an NPU 10 in a node 2 by using an OXC 2.

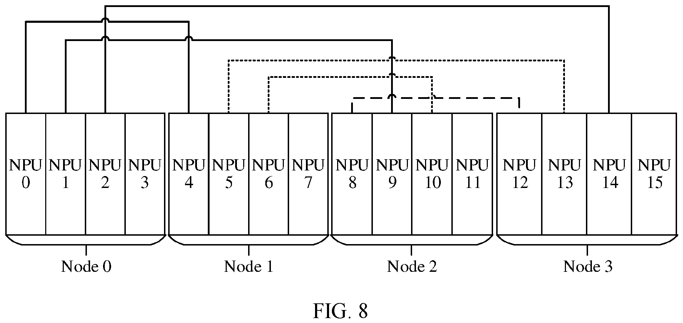

For an equivalence relationship (or referred to as a logical connection relationship) of connection between any two nodes by using an OXC device in FIG. 6 or FIG. 7, refer to FIG. 8. An NPU 0 to an NPU 3 in a node 0 are used as an example. The NPU 0 is connected to an NPU 4 in a node 1, the NPU 1 is connected to an NPU 9 in a node 2, the NPU 2 is connected to an NPU 14 in a node 3, the NPU 3 is not connected to an NPU in another node, and the NPU 3 may be referred to as an idle NPU. In this case, each node includes an idle NPU. This means that, in FIG. 6 or FIG. 7, a total quantity M of nodes in the system is equal to a total quantity N of NPUs in the nodes, and any node may have (M - 1) NPUs available to be connected to other (M - 1) nodes in the system. Therefore, each node may have (N - (M - 1)) remaining NPUs, that is, one NPU is an idle NPU.

Certainly, FIG. 6 to FIG. 8 only show a possible connection relationship in this application. In this application may further achieve a change in the logical connection relationship by switching an optical path in an OXC device. For a manner of optical path switching, refer to descriptions in FIG. 2. For example, in FIG. 7, as long as any two of the M nodes are connected via an OXC device, the NPU 0 in the node 0 may be connected to an NPU 8 in the node 2, and the NPU 4 in the node 1 may be connected to an NPU 12 in a node 3.

It should be added that in the system architectures (which may be referred to as a system architecture 1) in FIG. 6 to FIG. 8, a total quantity N of NPUs in a node is equal to a total quantity M of nodes in a computing cluster, that is, M = N. In addition, this application further provides the following system architecture 2 to system architecture 4. For ease of description, in the system architecture 2 to the system architecture 4, the OXC device means one OXC device. However, a case in which there are a plurality of OXC devices is not excluded in this application.

System architecture 2: $N = k \times M$, where k is greater than 1.

In any two nodes, k NPUs in one node are connected to k NPUs in another node in a one-to-one manner by using an OXC device, to construct k optical channels. Further, each node needs to be connected to other M - 1 nodes, that is, the node is connected to the other M - 1 nodes by using $k \times (M - 1)$ NPUs, so that the node further includes k idle NPUs.

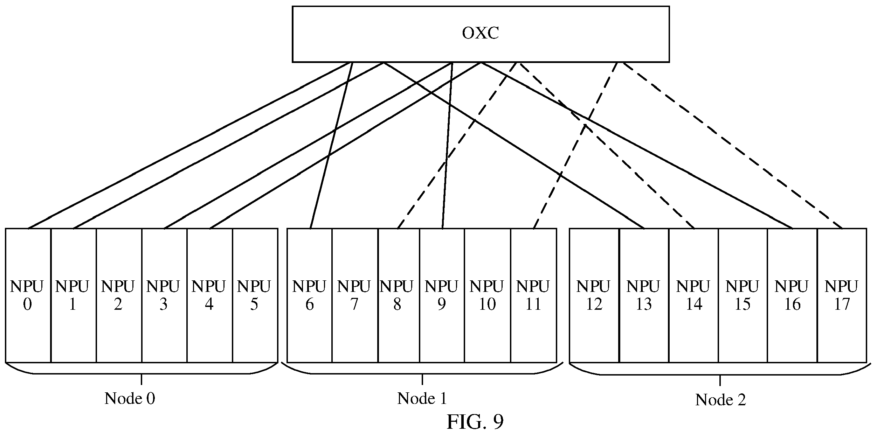

With reference to a system architecture shown in FIG. 9, the system includes three nodes, each node includes six NPUs, and two optical channels are constructed between any two nodes by using an OXC device, that is, M = 3, N = 6, and k = 2. For example, an NPU 0 in a node 0 is connected to an NPU 6 in a node 1 via the OXC device, and an NPU 3 in the node 0 is connected to an NPU 9 in the node 1 via the OXC device. In this way, there are two optical channels between the node 0 and the node 1. Further, an NPU 1 and an NPU 4 in the node 0 are configured to establish an optical channel with the node 2, and there are two idle NPUs in the node 0. Specifically, the two idle NPUs are an NPU 2 and an NPU 5.

System architecture 3: $N = k \times (M - 1)$, where k is greater than or equal to 1.

Any two of the M nodes are connected via an OXC device, and there is no idle NPU in each node. Further, the OXC device may construct k optical channels between any two nodes.

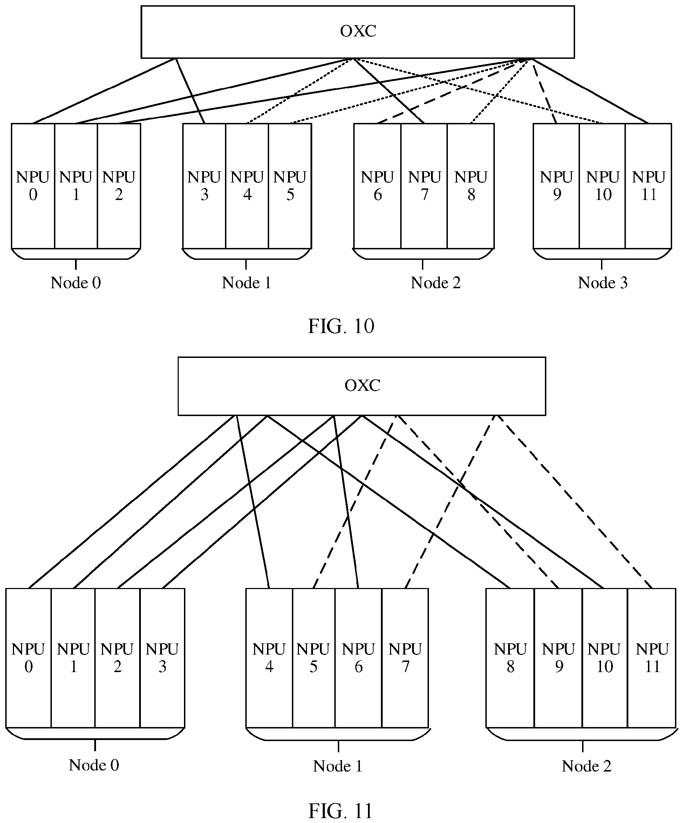

With reference to a system architecture shown in FIG. 10, the system includes four nodes, each node includes three NPUs, and one optical channel is constructed between any two nodes by using an OXC device, that is, M = 4, N = 3, and k = 1. All the three NPUs in each node are configured to connect this node to other three nodes. For example, a node 0 includes an NPU 0 to an NPU 2. The NPU 0 is connected to an NPU 3 in a node 1 via the OXC device, the NPU 1 is connected to an NPU 7 in a node 2 via the OXC device, the NPU 2 is connected to an NPU 11 in a node 3 via the OXC device, and there is no idle NPU in the node 0.

With reference to a system architecture shown in FIG. 11, the system includes three nodes, each node includes four NPUs, and two optical channels are constructed between any two nodes by using an OXC device, that is, M = 3, N = 4, and k = 2. All the four NPUs in each node are connected to NPUs in other two nodes via the OXC device. For example, a node 0 includes an NPU 0 to an NPU 3. The NPU 0 is connected to an NPU 4 in a node 1 via the OXC device, the NPU 1 is connected to an NPU 8 in a node 2 via the OXC device, the NPU 2 is connected to an NPU 6 in the node 1 via the OXC device, the NPU 3 is connected to an NPU 10 in the node 2 via the OXC device, and there is no idle NPU in the node 0.

System architecture 4: $N \neq k \times M$, and $N \neq k \times (M - 1)$, where k is greater than or equal to 1.

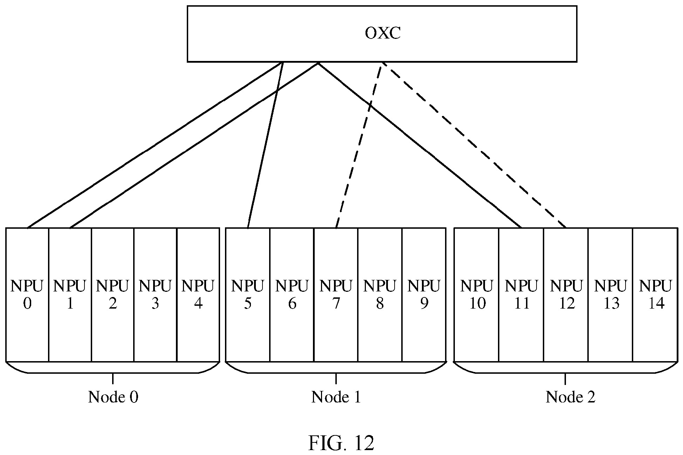

With reference to a system architecture shown in FIG. 12, the system includes three nodes, each node includes five NPUs, and one optical channel is constructed between any two nodes by using an OXC device, that is, M = 3, N = 5, and k = 1. Two NPUs in each node are configured to connect this node to other two nodes, and there are three idle NPUs in each node. A node 0 in FIG. 12 is used as an example. The node 0 includes an NPU 0 to an NPU 4. The NPU 0 is connected to an NPU 5 in a node 1 via the OXC device, the NPU 1 is connected to an NPU 11 in a node 2 via the OXC device, and the NPU 2, the NPU 3, and the NPU 4 are idle NPUs.

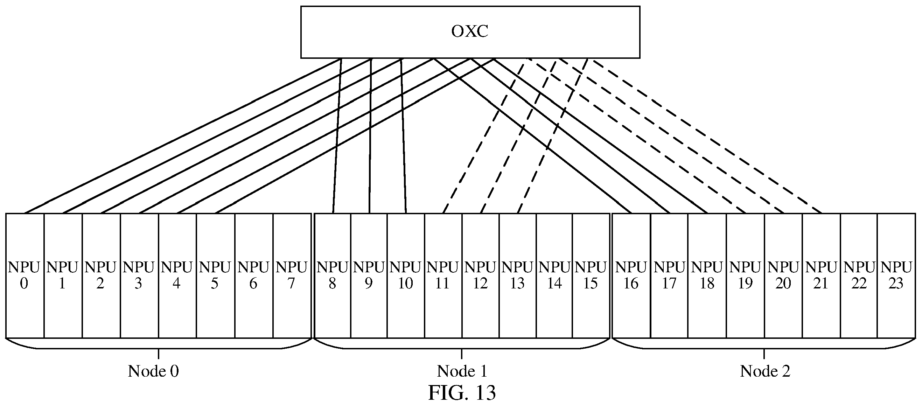

With reference to a system architecture shown in FIG. 13, the system includes three nodes, each node includes eight NPUs, and three optical channels are constructed between any two nodes by using an OXC device, that is, M = 3, N = 8, and k = 3. Six NPUs in each node are configured to connect this node to other two nodes. In addition, each node may include two idle NPUs. A node 0 in FIG. 13 is used as an example. The node 0 includes an NPU 0 to an NPU 7. The NPU 0, the NPU 1, and the NPU 2 are respectively connected to an NPU 8, an NPU 9, and an NPU 10 in a node 1 via the OXC device. The NPU 3, the NPU 4, and the NPU 5 are respectively connected to an NPU 16, an NPU 17, and an NPU 18 in a node 2 via the OXC device, and the NPU 6 and the NPU 7 are idle NPUs.

In this application, that any two nodes construct an optical channel by using an OXC device, or that any two NPUs construct an optical channel by using an OXC device may be described as optical connection/connection between any two nodes, optical connection/connection between any two NPUs, or optical connection/connection between one node and an NPU in another node.

Further, any two NPUs in a node may be directly or indirectly connected, and the connection may be an electrical connection.

For example, any two adjacent NPUs in a node may be directly connected. The any two adjacent NPUs in a node may be two adjacent NPUs among all NPUs sorted by NPU identifier or NPU number.

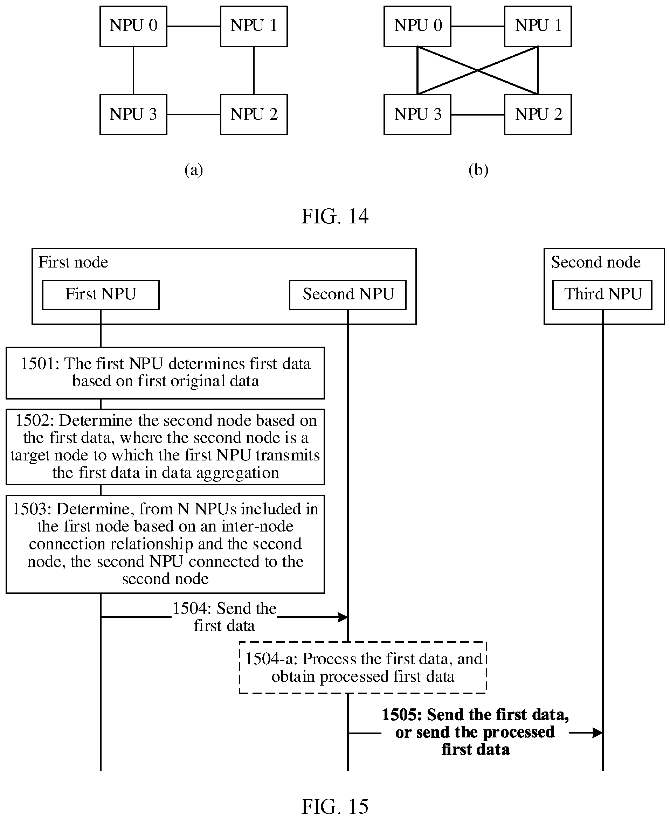

The node 0 in FIG. 6 is used as an example. Any two adjacent NPUs in the node 0 are directly connected. Refer to (a) in FIG. 14, an NPU 0 is directly connected to an NPU 1, the NPU 1 is directly connected to an NPU 2, the NPU 2 is directly connected to an NPU 3, and the NPU 0 is directly connected to the NPU 3, so that the four NPUs may form a connected ring. The NPU 0 is indirectly connected to the NPU 2, and the NPU 1 is indirectly connected to the NPU 3.

Further, when any NPU in this node sends data to another NPU in this node, the data may be transmitted to the another NPU through one or more channels. For example, when the NPU 0 sends data to the NPU 1, the data may be sent to the NPU 1 through a channel between the NPU 0 and the NPU 1. When the NPU 0 sends data to the NPU 2, the data may be sent to the NPU 2 through the channel between the NPU 0 and the NPU 1 and a channel between the NPU 1 and the NPU 2.

In addition, (b) in FIG. 14 provides another example of intra-node connection. Any two NPUs in a node 0 are directly connected. Specifically, an NPU 0 is directly connected to an NPU 1, an NPU 2, and an NPU 3, the NPU 1 is directly connected to the NPU 0, the NPU 2, and the NPU 3, the NPU 2 is directly connected to the NPU 1, the NPU 0, and the NPU 3, and the NPU 3 is directly connected to the NPU 1, the NPU 0, and the NPU 2. In this example, all NPUs in the node may be connected to a switch in the node, so as to implement direct connection between any two NPUs.

Further, when any NPU in this node sends data to another NPU in this node, the data may be transmitted to the another NPU through a channel between the two NPUs. For example, when the NPU 0 sends data to the NPU 1, the data may be sent to the NPU 1 through the channel between the NPU 0 and the NPU 1. When the NPU 0 sends data to the NPU 2, the data may be sent to the NPU 2 through a channel between the NPU 0 and the NPU 2.

For an NPU connection manner in another node, refer to (a) in FIG. 14, to implement direct connection between any two adjacent NPUs in a node, or refer to (b) in FIG. 14, to implement direct connection between any two NPUs in a node.

Based on the intra-node connection relationship and the inter-node connection relationship, in the inter-node allreduce operation shown in FIG. 4 or FIG. 5, data transmission between NPUs in any two nodes needs to be performed multiple times, and a data aggregation process has a relatively long delay. For example, the connection relationship between four nodes in FIG. 4 or FIG. 5 is shown in FIG. 6. When the NPU 1 in the node 0 sends data B1 to B3 to the NPU 5 in the node 1, the data B1 to B3 need to pass through a channel between the NPU 1 and the NPU 0 in the node 0, a channel between the NPU 0 in the node 0 and the NPU 4 in the node 1, and a channel between the NPU 4 and the NPU 5 in the node 1. That is, the process needs to undergo intra-node data transmission twice and inter-node data transmission once. Similarly, when the NPU 5 in the node 1 sends data B4 to B7 to the NPU 1 in the node 0, the process also needs to undergo intra-node data transmission twice and inter-node data transmission once.

Therefore, this application provides a collective communication method. An NPU in a node may directly send, based on a connection relationship between an NPU in the node and an NPU in another node, data that is in the NPU and that is to be sent to a target node to a target NPU that is in the node and that is connected to the target node. Further, the target NPU may send, to an NPU in the target node, the data or processed data, to avoid unnecessary data transmission, to reduce the delay in the data aggregation process.

It should be noted that, in this application, each NPU may first obtain topological information (or referred to as a topology) of a node in which the NPU is located. The topological information includes an inter-node connection relationship of the NPU in this node. Further, the inter-node connection relationship of the NPU indicates an NPU in another node connected to the NPU. The node 0 in FIG. 6 is used as an example. The NPU 0 in the node 0 may obtain an inter-node connection relationship of each NPU in the NPU 0 to the NPU 3. For example, the inter-node connection relationship obtained by the NPU 0 is shown in Table 1. The NPU 0 is connected to the NPU 4 in the node 1, the NPU 1 is connected to the NPU 9 in the node 2, the NPU 2 is connected to the NPU 14 in the node 3, and NPU 3 is an idle NPU.

Table 1

| NPU in a node 0 | Inter-node connection relationship of the NPU |
|---|---|
| NPU 0 | NPU 4 in a node 1 |
| NPU 1 | NPU 9 in a node 2 |
| NPU 2 | NPU 14 in a node 3 |
| NPU 3 | None |

For example, an NPU may obtain the foregoing inter-node connection relationship in the following two specific manners:

Manner 1: A node in a computing cluster is numbered $i_0$, and the $j_0$th NPU in the node may be represented as an NPU $(i_0, j_0)$. The NPU $(i_0, j_0)$ may determine that a peer NPU connected to the NPU $(i_0, j_0)$ is the $j1$th NPU in the $i_1$th node, where $j_1 = j_0$, and $i_1 \neq i_0$. Further, the NPU $(i_0, j_0)$ may obtain $i_1$ by performing a logical XOR operation on $i_0$.

Manner 2: The NPU in a node may obtain an inter-node configuration parameter delivered by a user, where the inter-node configuration parameter includes an inter-node connection relationship of the NPU in the node. For example, the inter-node configuration parameter includes that the NPU 0 is connected to the NPU 4 in the node 1, the NPU 1 is connected to the NPU 9 in the node 2, the NPU 2 is connected to the NPU 14 in the node 3, and the NPU 3 is an idle NPU. The NPU 0 may obtain the inter-node connection relationship of the NPU in this node based on the inter-node configuration parameter.

Further, the topological information may further include an intra-node connection relationship of the NPU in the node, and the intra-node connection relationship of the NPU may include a connection relationship between the NPU and another NPU in this node.

The node 0 shown in (a) in FIG. 14 is used as an example. For an intra-node connection relationship obtained by the NPU 0, refer to Table 2.

**Table 2**

| NPU in a node 0 | Intra-node connection relationship of the NPU |
|---|---|
| NPU 0 | NPU 1 and NPU 3 |
| NPU 1 | NPU 0 and NPU 2 |
| NPU 2 | NPU 1 and NPU 3 |
| NPU 3 | NPU 2 and NPU 0 |

The node 0 shown in (b) in FIG. 14 is used as an example. For an intra-node connection relationship obtained by the NPU 0, refer to Table 3.

**Table 3**

| NPU in a node 0 | Intra-node connection relationship of the NPU |
|---|---|
| NPU 0 | NPU 1, NPU 2, and NPU 3 |
| NPU 1 | NPU 0, NPU 2, and NPU 3 |
| NPU 2 | NPU 1, NPU 0, and NPU 3 |
| NPU 3 | NPU 0, NPU 1, and NPU 2 |

For example, an NPU may obtain the foregoing intra-node connection relationship in the following two specific manners:

Manner a: The NPU determines, based on information such as an NPU number of the NPU in the node and NPU numbers of all NPUs in the node, an intra-node connection relationship between the NPU and another NPU in the node.

Manner b: The NPU may obtain an intra-node configuration parameter delivered by a user, where the intra-node configuration parameter includes an intra-node connection relationship of the NPU in the node. For example, the intra-node configuration parameter includes that the NPU 0 is connected to the NPU 1 and the NPU 3, the NPU 1 is connected to the NPU 0 and the NPU 2, the NPU 2 is connected to the NPU 1 and the NPU 3, the NPU 3 is connected to the NPU 2 and the NPU 0, and the NPU 0 may obtain the intra-node connection relationship of the NPU in this node based on the intra-node configuration parameter.

In this way, the NPU 0 may obtain topological information of the node 0. The topological information may include an inter-node connection relationship of the NPU in the node 0, or include an inter-node connection relationship and an intra-node connection relationship of the NPU in the node 0. In addition, another NPU in the node 0 may also obtain the topological information of the node 0. Specifically, the topological information may be obtained based on the foregoing algorithm, or based on a configuration parameter (an inter-node configuration parameter and/or an intra-node configuration parameter) of a user, or obtained from the NPU 0 in the node 0, or the like.

In addition, in this application, the node 0 in FIG. 6 is merely an example for description. Each NPU in the node 1 to the node 3 in FIG. 6 may obtain, in the foregoing manners, topological information of a node in which the NPU is located. Similarly, in system architectures 2 to 4, each NPU may also obtain, in the foregoing manners, topological information of a node in which the NPU is located.

The foregoing describes in detail a manner in which the NPU in each node obtains the topological information of this node, and main information included in the topological information. The following describes the method according to this application with reference to a flowchart of the collective communication method shown in FIG. 15.

Step 1501: A first NPU determines first data based on original data in the first NPU.

The first NPU is an NPU in a first node.

The original data in the first NPU may be considered as data that needs to be aggregated by the first NPU with another NPU in this node or with an NPU in another node in a computing cluster. The original data in the first NPU may be referred to as first original data in the following.

For example, all NPUs in the computing cluster may jointly train a model, and the first NPU in the first node may obtain intermediate data in one iteration of local model training, and aggregate the intermediate data with an NPU in this node or with an NPU in another node. The intermediate data obtained by the first NPU in the one iteration is the first original data, and the intermediate data is, for example, one or more of a feature, a gradient, and a model parameter that are obtained by the NPU in the one iteration.

Step 1502: The first NPU determines a second node based on the first data. The second node is a target node to which the first NPU transmits the first data in data aggregation, that is, the first NPU needs to transmit the first data to the second node.

In a specific implementation, the first node determines the first data based on a collective communication algorithm and the first original data, and then determines the second node from M nodes in the computing cluster based on the first data. The collective communication algorithm may include at least one or more of the following: allreduce, alltoall, allgather, and bcast. For details about how the first NPU determines the first data and the second node, refer to related descriptions in the following different collective communication algorithms.

Step 1503: The first NPU determines, from N NPUs included in the first node based on an inter-node connection relationship and the second node, a second NPU connected to the second node.

Specifically, the first NPU may obtain the inter-node connection relationship of the NPU in the first node, and the first NPU selects, from the N NPUs in the first node based on the inter-node connection relationship of the NPU in the first node and the second node, an NPU that has a connection relationship with an NPU in the second node, and uses the selected NPU as the second NPU.

In a possible example, there is an optical channel between any two nodes in the computing cluster, an NPU in the first node has a connection relationship with an NPU in the second node, and the first NPU may use the NPU in the first node as the second NPU. For example, the inter-node connection relationship is shown in Table 1. The first node is a node 0, and the second node is a node 1. The first NPU may determine an NPU 0 as the second NPU based on the inter-node connection relationship and the node 1.

In another possible example, there are a plurality of optical channels between any two nodes in the computing cluster, k processors in the first node have a one-to-one connection relationship with k processors in the second node, and k is greater than 1. Correspondingly, the first NPU may use the k processors in the first node as k candidate processors based on the one-to-one connection relationship between the k processors in the first node and the k processors in the second node. The first NPU selects the second NPU from the k candidate processors. When selecting the second NPU from the k candidate processors, the first NPU may randomly select the second NPU, or may select the second NPU according to a preset rule.

Step 1504: The first NPU sends the first data to the second NPU.

For example, the first NPU may obtain an intra-node connection relationship of the NPU in the first node. For the intra-node connection relationship, refer to the description in Table 2 or Table 3. The first NPU transmits the first data to the second NPU based on the intra-node connection relationship of the NPU in the first node. For example, the intra-node connection relationship of the NPU in the first node is shown in Table 2. The first NPU is an NPU 0, and the second NPU is an NPU 2. The NPU 0 may transmit the first data to the NPU 2 through a channel between the NPU 0 and an NPU 1, and a channel between the NPU 1 and the NPU 2.

Correspondingly, the second NPU may receive the first data from the first NPU.

Step 1505: The second NPU sends the first data to a third NPU in the second node, or sends processed first data to the third NPU in the second node.

In this application, the third NPU is an NPU that is in the second node and that is connected to the second NPU.

After receiving the first data from the first NPU, the second NPU may send the first data to the third NPU.

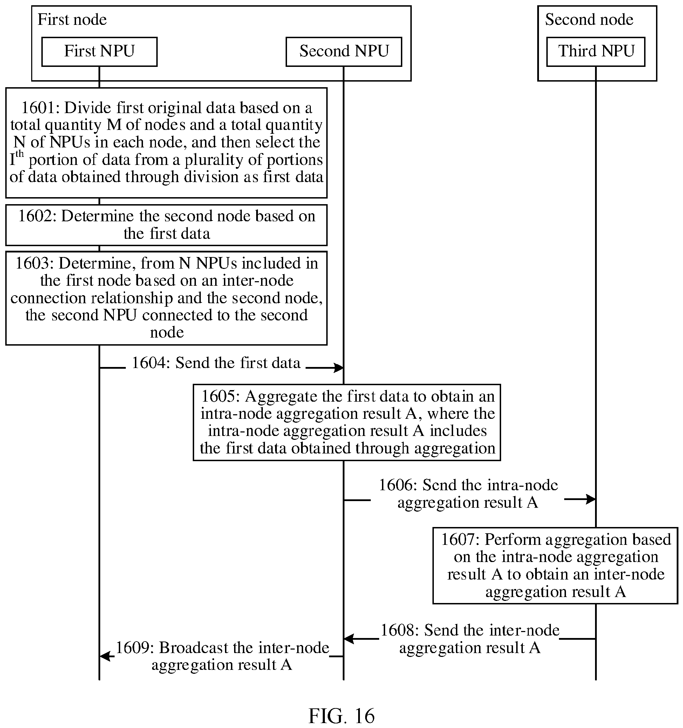

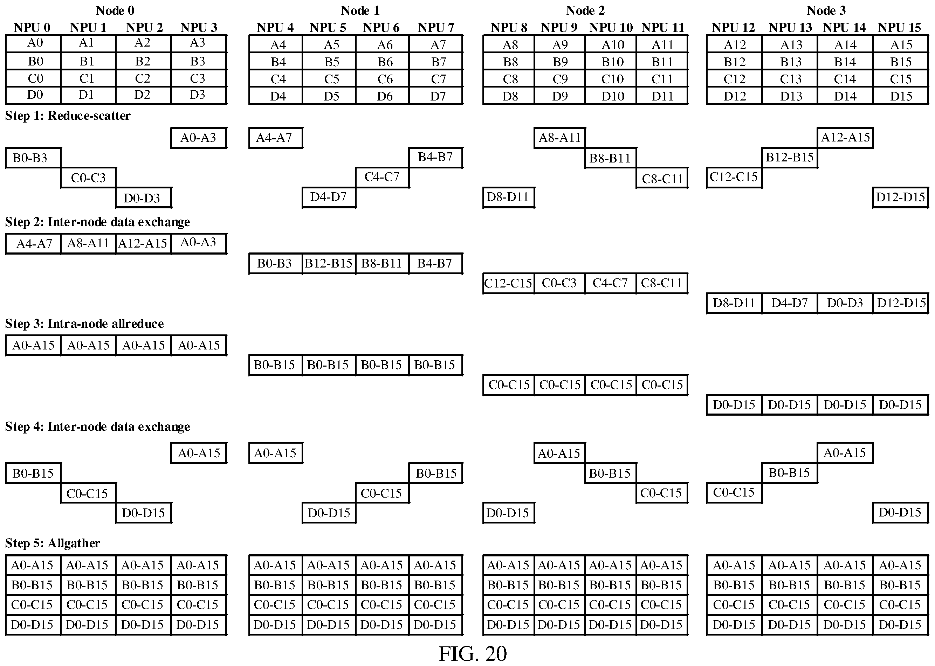

Alternatively, in another example, after the second NPU receives the first data from the first NPU, the method may further include step 1504-a: The second NPU processes (for example, aggregates) the first data to obtain processed first data. The second NPU then sends the processed first data to the third NPU. For a manner in which the second NPU processes the first data, refer to the related description of step 1605 in FIG. 16 or step 1 in FIG. 20.

In addition, the first NPU may be connected to an NPU (which may be referred to as a fourth NPU) in the third node. The first NPU may receive second data from the fourth NPU, where the second data may be data that is of another NPU in the third node and that is received by the fourth NPU, or data obtained by performing data processing by the fourth NPU on the data that is of another NPU in the third node and that is received by the fourth NPU. The first NPU may determine an inter-node aggregation result based on the second data. For a determining manner, refer to descriptions in the following different collective communication algorithms.

In the foregoing technical solution, the first processor sends the first data to the second processor, and the second processor sends the first data or the processed first data to the third processor. The second processor performs intra-node data aggregation. This obviates a need to first perform intra-node aggregation to obtain an aggregation result and then send the aggregation result to the second processor that is in the first node and that is connected to the second node. This helps reduce unnecessary data transmission and speed up data aggregation.

The following describes the collective communication method according to this application with reference to different collective communication algorithms.

1. Allreduce

FIG. 16 is a schematic flowchart of allreduce-based data aggregation according to this application.

Step 1601: A first NPU divides first original data based on a total quantity M of nodes and a total quantity N of NPUs in each node, and then selects the $I^{th}$ portion of data from a plurality of portions of data obtained through division as first data.

Specifically, when M is greater than N (that is, N = M - 1), the first NPU divides the first original data into M portions, and uses the $I^{th}$ portion of data in the M portions of data as the first data, where I is an integer in [1, M].

When M is less than or equal to N, the first NPU divides the first original data into N portions of data, and uses the $I^{th}$ portion of data in the N portions of data as the first data, where I is an integer in [1, N].

Step 1602: The first NPU determines a second node based on the first data.

The second node is the $J^{th}$ node in the M nodes, and J is a result of a modulo operation performed by I on M, or may be expressed as J = I mod M.

Step 1603: The first NPU determines, from N NPUs included in a first node based on an inter-node connection relationship and the second node, a second NPU connected to the second node.

For an implementation of this step, refer to the description in step 1503.

Step 1604: The first NPU sends the first data to the second NPU. Correspondingly, the second NPU receives the first data from the first NPU. For an implementation of this step, refer to the description in step 1504.

Step 1605: The second NPU aggregates the first data to obtain an intra-node aggregation result A.

It should be added that, another NPU (including the second NPU) other than the first NPU in the first node may also divide original data in the another NPU based on the total quantity M of nodes and the total quantity N of NPUs in each node, and then select the $I^{th}$ portion of data from a plurality of portions of data obtained through division. Further, if the another NPU is the second NPU, no processing is performed, and if the another NPU is not the second NPU, the another NPU may send the $I^{th}$ portion of data to the second NPU. Correspondingly, the second NPU may not only receive the first data from the first NPU, but also receive the $I^{th}$ portion of data from the another NPU other than the first NPU in the first node. The second NPU may aggregate the $I^{th}$ portion of data in each NPU in the first node, to obtain the intra-node aggregation result A. The intra-node aggregation result A may include data obtained by aggregating the first data by the second NPU.

With reference to the example in FIG. 6, for example, the first node is a node 0, and the second NPU in the first node is an NPU 0. The NPU 0 determines the $I^{th}$ portion of data in the NPU 0, an NPU 1 determines the $I^{th}$ portion of data in the NPU 1, an NPU 2 determines the $I^{th}$ portion of data in the NPU 2, and an NPU 3 determines the $I^{th}$ portion of data in the NPU 3. Further, the NPU 1 sends the $I^{th}$ portion of data in the NPU 1 to the NPU 0, the NPU 2 sends the $I^{th}$ portion of data in the NPU 2 to the NPU 0, and the NPU 3 sends the $I^{th}$ portion of data in the NPU 3 to the NPU 0. Therefore, the NPU 0 may obtain the intra-node aggregation result A by way of aggregation based on the $I^{th}$ portion of data in the NPU 0, the $I^{th}$ portion of data in the NPU 1, the $I^{th}$ portion of data in the NPU 2, and the $I^{th}$ portion of data in the NPU 3.

In a possible implementation, any two adjacent NPUs in the first node are directly connected, and an NPU in the first node may aggregate the $I^{th}$ portion of data in each NPU to the second NPU by using a ring algorithm.

For an NPU in the first node, the NPU may determine, based on the inter-node connection relationship and an intra-node connection relationship of the NPU in the first node, data that needs to be sent by the NPU to a next NPU in each round of the ring algorithm, and update, after receiving data in a previous NPU, the received data to local data.

Herein, a plurality of NPUs in the first node may be sorted by number. The next NPU of a specific NPU may be an NPU whose number follows the number of the specific NPU. The previous NPU of a specific NPU may be an NPU whose number precedes the number of the specific NPU.

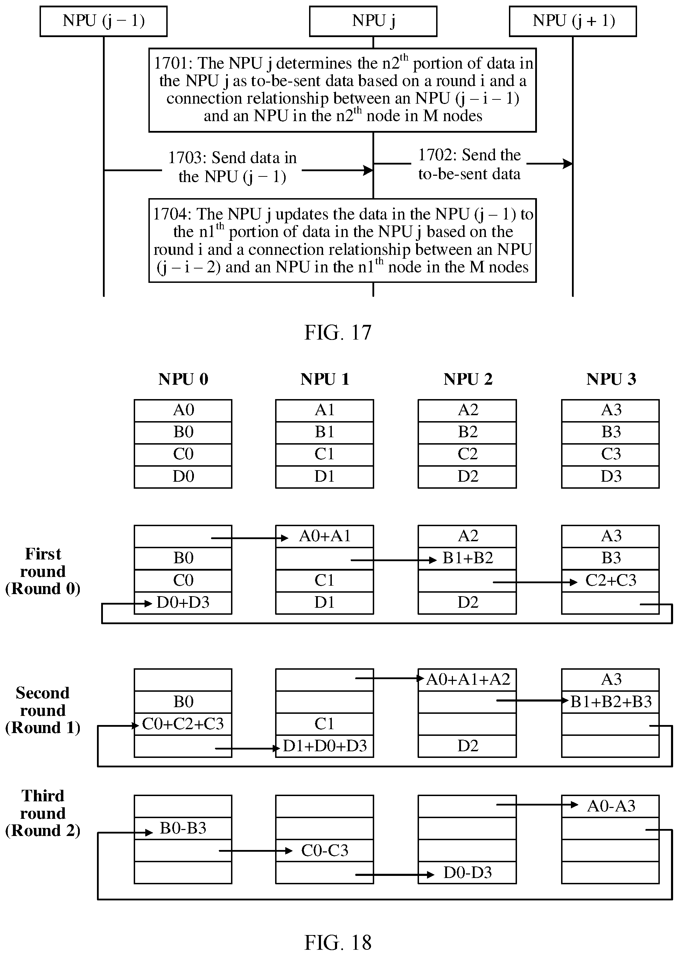

FIG. 17 is a schematic flowchart of ring algorithm-based data transmission according to this application.

The ring algorithm may undergo a total of N rounds. For ease of description, the first round to the $N^{th}$ round in the N rounds may be respectively represented as a round 0 to a round N - 1, that is, the round 0 represents the first round, the round i represents the $(i + 1)^{th}$ round, and the round (N - 1) represents the $N^{th}$ round, where i is an integer in [0, N - 1]. Further, the $1^{st}$ NPU to the $N^{th}$ NPU in a first node may be respectively represented as an NPU 0 to an NPU (N - 1).

In the round i of the ring algorithm:

Step 1701: An NPU j determines the $n2^{th}$ portion of data in the NPU j as to-be-sent data based on the round i and a connection relationship between an NPU (j - i - 1) and an NPU in the $n2^{th}$ node in M nodes.

Step 1702: The NPU j sends the to-be-sent data to an NPU (j + 1).

Correspondingly, the NPU (j + 1) receives the data from the NPU j, and may update the received data to local data based on an algorithm similar to that in step 1704.

Step 1703: An NPU (j 1) sends data to the NPU j. Correspondingly, the NPU j receives the data from the NPU (j - 1).

Step 1704: The NPU j updates the data in the NPU (j - 1) to the $n1^{th}$ portion of data in the NPU j based on the round i and a connection relationship between an NPU (j - i - 2) and the NPU in the $n1^{th}$ node in the M nodes.

In this embodiment, the NPU j, the NPU (j - 1), the NPU (j - i - 2), the NPU (j - i - 1), and the NPU (j + 1) are all NPUs in the first node. It may be understood that N NPUs in the first node may form a connected ring. For example, j = 1, and an NPU preceding the 1st NPU is the Nth NPU.

In this embodiment, a sequence of step 1702 and step 1703 is not limited. The NPU j may first send the data to the NPU (j + 1), and then receive the data from the NPU (j - 1). Alternatively, the NPU j may first receive the data from the NPU (j - 1), and then send the data to the NPU (j + 1). Alternatively, the NPU j may simultaneously receive the data from the NPU (j - 1) and send the data to the NPU (j + 1).

To describe the implementation of FIG. 17 more clearly, the following describes the implementation with reference to a specific example. For the specific example, refer to the schematic diagram of ring algorithm-based intra-node aggregation shown in FIG. 18.

The first node includes four NPUs, where the 1st NPU to the 4th NPU may be respectively represented as the NPU 0 to the NPU 3. Original data in each NPU is divided into N portions. Specifically, original data in the NPU 0 is divided into A0, B0, C0, and D0, original data in the NPU 1 is divided into A1, B1, C1, and D1, original data in the NPU 2 is divided into A2, B2, C2, and D2, and original data in the NPU 3 is divided into A3, B3, C3, and D3.

For an inter-node connection relationship of each NPU in the NPU 0 to the NPU 3 in the first node, refer to Table 1. For an intra-node connection relationship of each NPU in the NPU 0 to the NPU 3 in the first node, refer to Table 2.

Specifically, refer to a round 0 in FIG. 18.

The NPU 0 determines, based on the round 0 of the ring algorithm and a connection relationship between the NPU 3 and an NPU in the node 0 (where the NPU 3 is an idle NPU and may be considered to be connected to the NPU in the node 0), that to-be-sent data is data A0, and sends the data A0 to the NPU 1. Correspondingly, the NPU 1 obtains A0+A1.

The NPU 0 receives data from the NPU 3, and updates the received data to the third portion of data in the NPU 0 based on the round 0 of the ring algorithm and a connection relationship between the NPU 2 and an NPU in the 3rd node, to obtain D0+D3.

Similarly, the NPU 1 determines that to-be-sent data in the round 0 of the ring algorithm is data B1, and sends the data B1 to the NPU 2. Correspondingly, the NPU 2 obtains B1+B2. The NPU 2 determines that to-be-sent data in the round 0 of the ring algorithm is data C2, and sends the data C2 to the NPU 3. Correspondingly, the NPU 3 obtains C2+C3.

Similarly, each NPU determines to-be-sent data in the round 1 and the round 2 of the ring algorithm, sends the determined data to a next NPU corresponding to the NPU, and updates the data received in the round 1 and the round 2 to the local data. For a result of the data in each NPU, refer to FIG. 18. After the round 2 ends, the Ith portion of data in each NPU is sent to the second NPU, and the second NPU performs intra-node aggregation based on the Ith portion of data in each NPU in the node in which the second NPU is located, to obtain an intra-node aggregation result A. For example, the NPU 3 obtains an aggregation result of the first portion of data in each NPU in the first node, that is, A0 to A3. For another example, the NPU 0 obtains an aggregation result of the second portion of data in each NPU in the first node, that is, B0 to B3.

In the foregoing examples, each NPU directly aggregates the Ith portion of data in each NPU to the second NPU through an intra-node channel based on the inter-node connection relationship and the intra-node connection relationship of the NPU in the first node. Compared with a solution in which each NPU in the first node aggregates the Ith portion of data in each NPU to the Ith NPU in the first node, and then the Ith NPU sends an aggregation result to the second NPU, this solution helps reduce a quantity of data transmission times and improve intra-node aggregation efficiency.

In another possible implementation, any two NPUs in the first node are directly connected, and an NPU in the first node may aggregate the Ith portion of data in each NPU to the second NPU by using a fullmesh algorithm.

For an NPU in the first node, the NPU sends the Ith portion of data in the NPU to the second NPU through an intra-node channel between the NPU and the second NPU. Correspondingly, the second NPU obtains the intra-node aggregation result A based on the Ith portion of data in another NPU and the Ith portion of data in the second NPU.

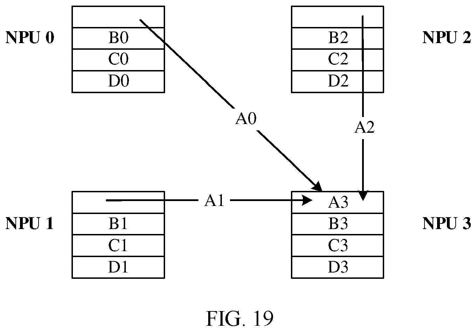

FIG. 19 is a schematic diagram of another fullmesh algorithm-based intra-node aggregation according to this application. For data in an NPU in a first node, refer to descriptions in the related embodiment in FIG. 18.

For an inter-node connection relationship of each NPU in an NPU 0 to an NPU 3 in the first node, refer to Table 1. For an intra-node connection relationship of each NPU in the NPU 0 to the NPU 3 in the first node, refer to Table 3.

Specifically, the NPU 0 determines that data A0 needs to be aggregated to a node 0, and sends the data A0 to an idle NPU (that is, the NPU 3) in the node 0. The NPU 1 determines that data A1 needs to be aggregated to the node 0, and sends the data A1 to the NPU 3. The NPU 2 determines that data A2 needs to be aggregated to the node 0, and sends the data A2 to the NPU 3. Correspondingly, the NPU 3 receives the data A0 in the NPU 0, the data A1 in the NPU 1, and the data A2 in the NPU 2, and obtains an aggregation result, that is, A0 to A3, by aggregating the first portion of data in the first node with reference to data A3 in the NPU 3.

Similarly, the NPU 1 determines that data B1 needs to be aggregated to a node 1, and sends the data B1 to the NPU 0 based on a connection relationship between the NPU 0 and the node 1. The NPU 2 determines that data B2 needs to be aggregated to the node 1, and sends the data B2 to the NPU 0 based on a connection relationship between the NPU 0 and the node 1. The NPU 3 determines that data B3 needs to be aggregated to the node 1, and sends the data B3 to the NPU 0 based on a connection relationship between the NPU 0 and the node 1. Correspondingly, the NPU 0 receives the data B1 in the NPU 1, the data B2 in the NPU 2, and the data B3 in the NPU 3, and obtains an aggregation result, that is, B0 to B3, by aggregating the second portion of data in the first node with reference to data B0 in the NPU 0. Other cases are similar, and details are not described herein.

Step 1606: The second NPU sends the intra-node aggregation result A to a third NPU in the second node. Correspondingly, the third NPU in the second node receives the intra-node aggregation result A.

Step 1607: The third NPU performs aggregation processing based on the intra-node aggregation result A to obtain an inter-node aggregation result A. The aggregation processing is, for example, an intra-node allreduce operation.

Specifically, the third NPU may further obtain the I$^{th}$ portion of data in each of other NPUs in the second node from the other NPUs in the second node, and perform aggregation to obtain an intra-node aggregation result B. Further, an NPU in the second node may be further connected to another node, and the NPU in the second node may receive an intra-node aggregation result of the I$^{th}$ portion of data from the another node. The third NPU may obtain the intra-node aggregation result of the I$^{th}$ portion of data from another NPU in the second node, so that the third NPU may obtain the inter-node aggregation result A by performing aggregation processing based on an intra-node aggregation result of the I$^{th}$ portion of data in each of the M nodes. The third NPU broadcasts the inter-node aggregation result A to another NPU other than the third NPU in the second node.

In addition, each NPU in the second node may obtain the intra-node aggregation result of the I$^{th}$ portion of data in each of the M nodes, and perform aggregation to obtain the inter-node aggregation result A.

Step 1608: The third NPU sends the inter-node aggregation result A to the second NPU. Correspondingly, the second NPU receives the inter-node aggregation result A.

Step 1609: The second NPU broadcasts the inter-node aggregation result A to another NPU in the first node.

For example, any two adjacent NPUs in the first node are directly connected, and the second NPU may send the inter-node aggregation result A to the another NPU in the first node by using a ring algorithm, a butterfly algorithm, or the like.

For another example, any two NPUs in the first node are directly connected, and the second NPU may send the inter-node aggregation result A to the another NPU in the first node by using a fullmesh algorithm.

In addition, the first node may be the J'$^{th}$ node in the M NPUs, and J' is a result of a modulo operation performed by I' on M. After dividing the first original data based on the total quantity M of nodes and the total quantity N of NPUs in each node, the first NPU selects the I'$^{th}$ portion of data from a plurality of portions of data obtained through division, where I' is an integer in [1, M]. A target node corresponding to the I'$^{th}$ portion of data is the first node. The first NPU may determine an idle NPU from the N NPUs in the first node, and then send the I'$^{th}$ portion of data to the idle NPU in the first node. The idle NPU may obtain the I'$^{th}$ portion of data in each NPU in the first node, and aggregate the I'$^{th}$ portion of data to obtain an intra-node aggregation result of the I'$^{th}$ portion of data in the first node. Further, the first NPU may be further connected to a fourth NPU in a third node, and the first NPU may receive second data from the fourth NPU, where the second data may be an intra-node aggregation result of the I'$^{th}$ portion of data in the third node. The first NPU performs aggregation processing based on the intra-node aggregation result of the I'$^{th}$ portion of data in the third node and the intra-node aggregation result of the I'$^{th}$ portion of data in the first node to obtain an inter-node aggregation result B.

For an implementation in which the fourth NPU obtains the intra-node aggregation result of the I'$^{th}$ portion of data in the third node, refer to the description about how the second NPU obtains the intra-node aggregation result A of the I'$^{th}$ portion of data in the first node. For an implementation in which the first NPU determines the inter-node aggregation result B, refer to the description about how the third NPU determines the inter-node aggregation result A.

In addition, based on a value relationship between the total quantity M of nodes and the total quantity N of NPUs in each node, the allreduce-based data aggregation in this application may include at least the following Example 1 to Example 4.

Example 1: M = N

FIG. 20 is a schematic diagram of allreduce-based data aggregation. The computing cluster includes four nodes. For a connection relationship between the four nodes, refer to FIG. 6 or FIG. 7.

Further, each node includes four NPUs, and each NPU may divide original data in the NPU into four portions. For specific node numbers, NPU numbers of NPUs in each node, and data numbers of data in each NPU, refer to FIG. 20.

In reduce-scatter in step 1, the following operations are performed.

For any NPU, the following steps may be performed.

The NPU selects the first portion of data from the four portions of data in the NPU. The NPU determines to aggregate the first portion of data to a node 0, and then determines another NPU that is in a node in which the NPU is located and that is connected to the node 0, and sends the first portion of data to the another NPU. Alternatively, when determining that the node 0 is the node in which the NPU is located, the NPU sends the first portion of data to an idle NPU in the node in which the NPU is located.

Specifically, each NPU in an NPU 0 to an NPU 3 in the node 0 aggregates the first portion of data in the NPU to the idle NPU (that is, the NPU 3). Correspondingly, the NPU 3 includes data A0 to A3.

Each NPU in an NPU 4 to an NPU 7 in the node 1 aggregates the first portion of data in the NPU to an NPU (that is, the NPU 4) connected to the node 0. Correspondingly, the NPU 4 includes data A4 to A7.

Each NPU in an NPU 8 to an NPU 11 in the node 2 aggregates the first portion of data in the NPU to an NPU (that is, the NPU 9) connected to the node 0. Correspondingly, the NPU 9 includes data A8 to A11.

Each NPU in an NPU 12 to an NPU 15 in a node 3 aggregates the first portion of data in the NPU to an NPU (that is, the NPU 14) connected to the node 0. Correspondingly, the NPU 14 includes data A12 to A15.

For how each node in the node 1 to the node 3 performs intra-node aggregation on the second portion of data, the third portion of data, and the fourth portion of data in the node, refer to the foregoing description about how each node performs intra-node aggregation on the first portion of data in the node.

Further, a manner in which each node performs intra-node aggregation may be implemented by using the ring algorithm in the related embodiment in FIG. 17 or FIG. 18, or by using the fullmesh algorithm in the related embodiment in FIG. 19.

In inter-node data exchange in step 2, the following operations are performed.

The NPU 4 in the node 1 sends the data A4 to A7 to the NPU 0 in the node 0, the NPU 9 in the node 2 sends the data A8 to A11 to the NPU 1 in the node 0, and the NPU 14 in the node 3 sends the data A12 to A15 to the NPU 2 in the node 0, so that the four NPUs in the node 0 may obtain A0 to A3, A4 to A7, A8 to A11, and A12 to A15 respectively.

Similarly, the four NPUs in the node 1 may obtain B0 to B3, B4 to B7, B8 to B11, and B12 to B15 respectively. The four NPUs in the node 2 may obtain C0 to C3, C4 to C7, C8 to C11, and C12 to C15 respectively. The four NPUs in the node 3 may obtain D0 to D3, D4 to D7, D8 to D11, and D12 to D15 respectively.

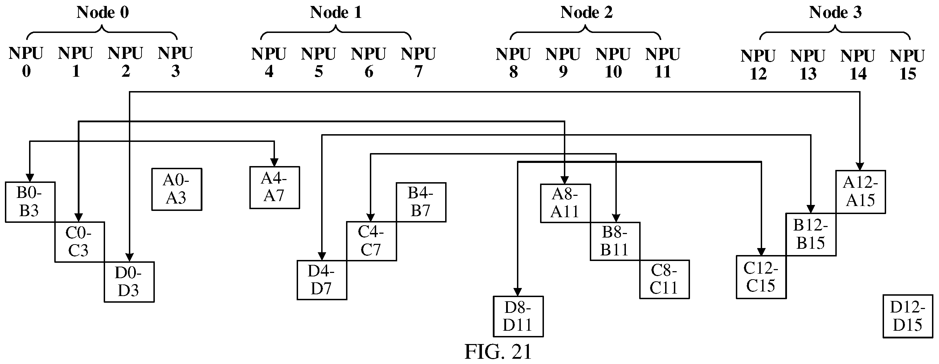

Alternatively, as shown in FIG. 21, the NPU 0 in the node 0 and the NPU 4 in the node 1 may exchange data through an optical channel between the NPU 0 and the NPU 4; the NPU 1 in the node 0 and the NPU 9 in the node 2 may exchange data through an optical channel between the NPU 1 and the NPU 9; the NPU 2 in the node 0 and the NPU 14 in the node 3 may exchange data through an optical channel between the NPU 2 and the NPU 14; and the like.

In intra-node allreduce in step 3, the following operations are performed.

The NPU 0 to the NPU 3 in the node 0 may perform intra-node allreduce, so that each NPU in the node 0 obtains an aggregation result, that is, data A0 to A15, of the first portion of data in each of the four nodes.

Similarly, the second portion of data in each node may be aggregated to each NPU in the node 1, and an aggregation result is data B0 to B15. The third portion of data in each node may be aggregated to each NPU in the node 2, and an aggregation result is data C0 to C15. The fourth portion of data in each node may be aggregated to each NPU in the node 3, and an aggregation result is data D0 to D15.

Further, for an intra-node allreduce method for each node, refer to the butterfly algorithm in FIG. 5. The method may alternatively be implemented by using the ring algorithm, the fullmesh algorithm, or another algorithm.

In inter-node data exchange in step 4, the following operations are performed.

For the data A0 to A15, the NPU 0 in the node 0 sends the data A0 to A15 to the NPU 4 in the node 1, the NPU 1 in the node 0 sends the data A0 to A15 to the NPU 9 in the node 2, and the NPU 2 in the node 0 sends the data A0 to A15 to the NPU 14 in the node 3, so that each node can obtain the data A0 to A15.

Similarly, each node can obtain the data B0 to B15, the data C0 to C15, and the data D0 to D15.

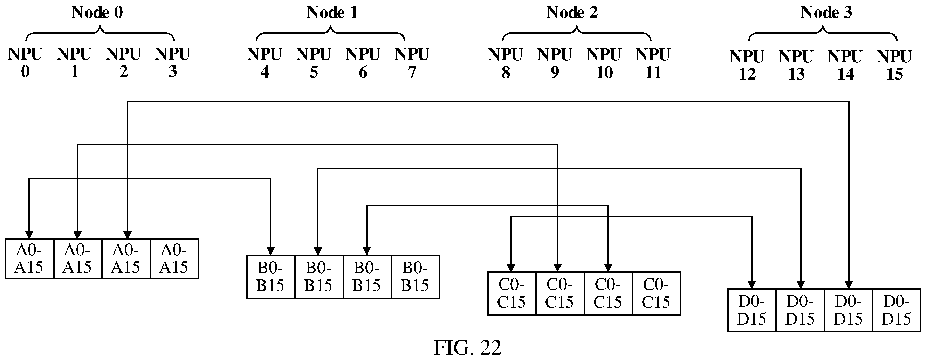

Alternatively, as shown in FIG. 22, the NPU 0 in the node 0 and the NPU 4 in the node 1 exchange data through an optical channel between the NPU 0 and the NPU 4; the NPU 1 in the node 0 and the NPU 9 in the node 2 exchange data through an optical channel between the NPU 1 and the NPU 9; the NPU 2 in the node 0 and the NPU 14 in the node 3 exchange data through an optical channel between the NPU 2 and the NPU 14; and the like. In this way, a result of step 4 in FIG. 20 is achieved.

In allgather in step 5, the following operations are performed.

For the data A0 to A15, the NPU 3 in the node 0 sends the data A0 to A15 to other NPUs in this node, the NPU 4 in the node 1 sends the data A0 to A15 to other NPUs in this node, the NPU 9 in the node 2 sends the data A0 to A15 to other NPUs in this node, and the NPU 14 in the node 3 sends the data A0 to A15 to other NPUs in this node. In this way, each NPU in each node may obtain the data A0 to A15.

Similarly, each NPU in each node may also obtain the data B0 to B15, the data C0 to C15, and the data D0 to D15. In this way, allreduce algorithm-based data aggregation is completed.

Further, a manner in which each node performs intra-node allgather may be implemented by using the ring algorithm in the related embodiment in FIG. 17 or FIG. 18, or by using the fullmesh algorithm in the related embodiment in FIG. 19.

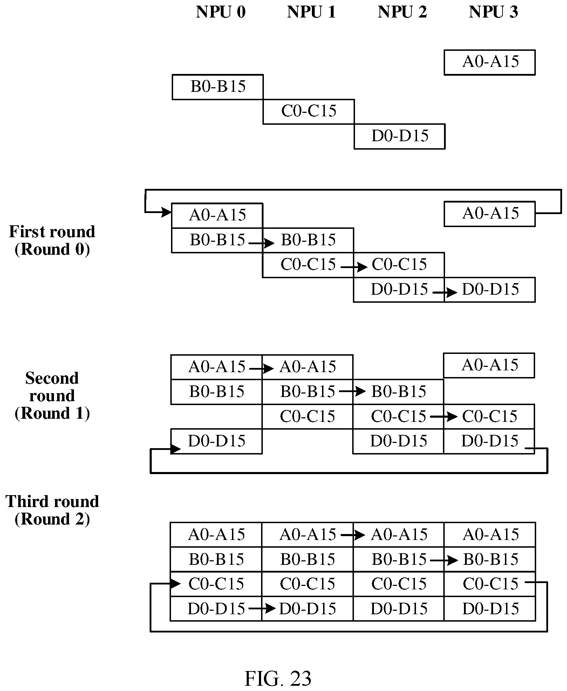

FIG. 23 shows an example of a ring algorithm-based aggregation manner. A node 0 is used as an example.

Each NPU in an NPU 0 to an NPU 3 sends data to a next NPU of the NPU based on the first round (that is, a round 0) of the ring algorithm. Specifically, the NPU 3 sends A0 to A15 to the NPU 0, the NPU 0 sends B0 to B15 to the NPU 1, the NPU 1 sends C0 to C15 to the NPU 2, and the NPU 2 sends D0 to D15 to the NPU 3.

Similarly, in the second round (that is, a round 1) and the third round (that is, a round 2), each NPU in the NPU 0 to the NPU 3 also sends data to a next NPU of the NPU based on the ring algorithm, to achieve the result of step 5 in FIG. 20.

It should be noted that, in step 3 in FIG. 20, the NPU 0 in the node 0 has storage space. The storage space may be represented as storage space 1, and the storage space 1 records the data A0 to A15. In step 4 in FIG. 20, another storage space is configured for the NPU 0 in the node 0. The another storage space may be represented as storage space 2, and the storage space 2 may be used to store the data B0 to B15 from the NPU 4 in the node 1. Because the storage space 1 and the storage space 2 are different, the NPU 0 does not include the data A0 to A15 in step 4. Further, in step 5, the NPU 0 needs to receive the data A0 to A15 broadcast by the NPU 3.

In addition, the NPU 0 may further write the data A0 to A15 in the storage space 1 to the storage space 2. In this way, in step 4, the NPU 0 may further include the data A0 to A15. In step 5, the NPU 0 does not need to receive the data A0 to A15 broadcast by the NPU 3. Alternatively, in step 3 and step 4, the NPU 0 may further share same storage space. In this way, in step 4, the NPU 0 may further include the data A0 to A15. In step 5, the NPU 0 does not need to receive the data A0 to A15 broadcast by the NPU 3 either. This description is also applicable to other related steps in FIG. 20, and related steps in other figures.

Example 2: N = M - 1

In the examples in FIG. 20 to FIG. 23, a total quantity M of nodes is equal to a total quantity N of NPUs in each node, each node includes one idle NPU, and each NPU in the node may divide original data in the NPU into N portions. Further, when determining that the I$^{th}$ portion of data needs to be aggregated to this node, the NPU may aggregate the I$^{th}$ portion of data to the idle NPU in this node. In addition, the total quantity N of NPUs in each node may be equal to the total quantity M of nodes minus one, that is, M - 1, no idle NPU exists in each node, and each NPU in each node may divide original data in the NPU into M portions. Further, when determining that the I$^{th}$ portion of data needs to be aggregated to this node, the NPU may put data processing on hold temporarily. When determining that the I$^{th}$ portion of data needs to be aggregated to another node, the NPU may send the I$^{th}$ portion of data to a second NPU that is in a second node and that is connected to a third NPU, and a subsequent step is similar to the example of M = N.

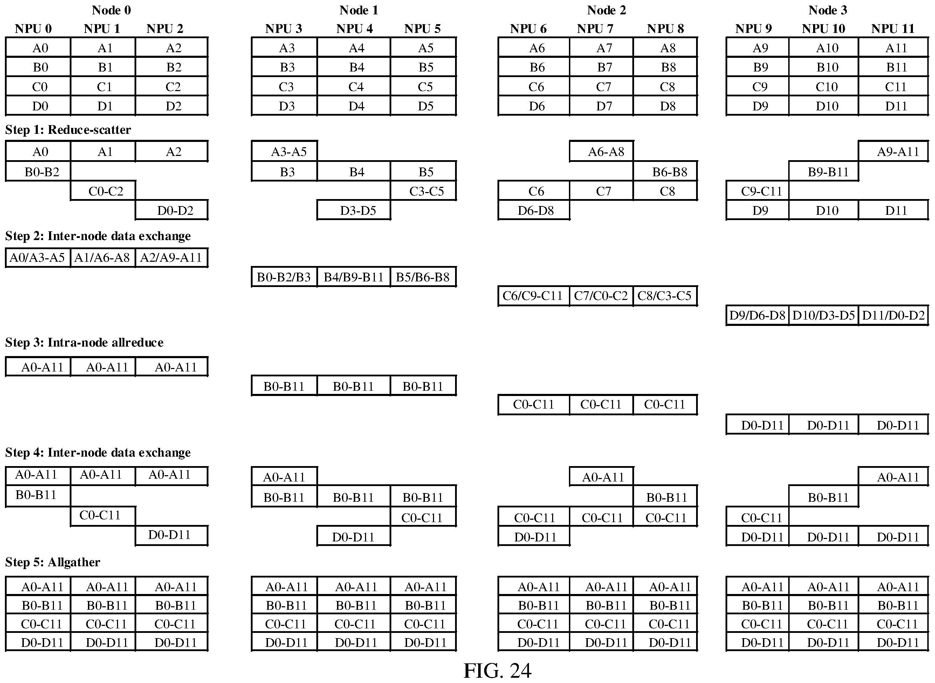

FIG. 24 is a schematic diagram of another allreduce-based data aggregation. The system includes four nodes. For a connection relationship between the four nodes, refer to FIG. 10. Each node includes three NPUs, and original data in each NPU may be divided into four portions. For specific node numbers, NPU numbers of NPUs in each node, and data numbers of data in each NPU, refer to FIG. 24.

In reduce-scatter in step 1, the following operations are performed.

For the first portion of data in each node, the first portion of data needs to be aggregated to a node 0. Therefore, each NPU in a node 1 to a node 3 may aggregate the first portion of data in the NPU to another NPU that is in a node in which the NPU is located and that is connected to the node 0. The node 0 does not have an idle NPU, and each NPU in the node 0 may temporarily put on hold transmission of the first portion of data in the NPU.

Specifically, each NPU in an NPU 0 to an NPU 2 in the node 0 puts the first portion of data in the NPU on hold.

Each NPU in an NPU 3 to an NPU 5 in the node 1 aggregates the first portion of data in the NPU to an NPU (that is, the NPU 3) connected to the node 0. Correspondingly, the NPU 3 includes data A3 to A5.

Each NPU in an NPU 6 to an NPU 8 in the node 2 aggregates the first portion of data in the NPU to an NPU (that is, the NPU 7) connected to the node 0. Correspondingly, the NPU 7 includes data A6 to A8.

Each NPU in an NPU 9 to an NPU 11 in the node 3 aggregates the first portion of data in the NPU to an NPU (that is, the NPU 11) connected to the node 0. Correspondingly, the NPU 11 includes data A9 to A11.

Similarly, each NPU in the NPU 3 to the NPU 5 in the node 1 puts the second portion of data in the NPU on hold, and each of the node 0, the node 2, and the node 3 performs intra-node aggregation on the second portion of data in the corresponding node.

Each NPU in the NPU 6 to the NPU 8 in the node 2 puts the third portion of data in the NPU on hold, and each of the node 0, the node 1, and the node 3 performs intra-node aggregation on the third portion of data in the corresponding node.

Each NPU in the NPU 9 to the NPU 11 in the node 3 puts the fourth portion of data in the NPU on hold, and each of the node 0, the node 1, and the node 2 performs intra-node aggregation on the fourth portion of data in the corresponding node.

Further, an intra-node aggregation manner for each node may be implemented by using a ring algorithm, a fullmesh algorithm, or another algorithm.

In inter-node data exchange in step 2, the following operations are performed.

For the first portion of data in each node, the NPU 3 in the node 1 sends data A3 to A5 to the NPU 0 in the node 0, and the NPU 0 in the node 1 obtains data A0/A3 to A5; the NPU 7 in the node 2 sends data A6 to A8 to the NPU 1 in the node 0, and the NPU 1 in the node 0 obtains data A1/A6 to A8; and the NPU 11 in the node 3 sends data A9 to A11 to the NPU 2 in the node 0, and the NPU 2 in the node 0 obtains data A2/A9 to A11.

Similarly, the NPU 3 in the node 1 includes data B0 to B2/B3, the NPU 4 in the node 1 includes data B4B9 to B11, and the NPU 5 in the node 1 includes data B5/B6 to B8.

The NPU 6 in the node 2 includes data C6/C9 to C11, the NPU 7 in the node 2 includes data C7/C0 to C2, and the NPU 8 in the node 2 includes data C8/C3 to C5.

The NPU 9 in the node 3 includes data D9/D6 to D8, the NPU 10 in the node 3 includes data D10/D3 to D5, and the NPU 11 in the node 3 includes data D11/D0 to D2.

For specific implementations of intra-node allreduce in step 3, inter-node data exchange in step 4, and allgather in step 5, refer to descriptions in FIG. 20 to FIG. 23. For a result of each step, refer to FIG. 24, and details are not described again.

Example 3: N = k × M, where k > 1

In addition, the total quantity N of NPUs in each node may be k times the total quantity M of nodes, where k is greater than 1. Original data in each NPU may be divided into N portions of data. For the Ith portion of data in the N portions of data, the NPU may determine, based on the Ith portion of data and the total quantity M of nodes, a node to which the Ith portion of data is aggregated. Specifically, the NPU may determine a result J of a modulo operation performed by I on M, and determine the Ith node in the M nodes as a target node (that is, a second node) corresponding to the Ith portion of data.

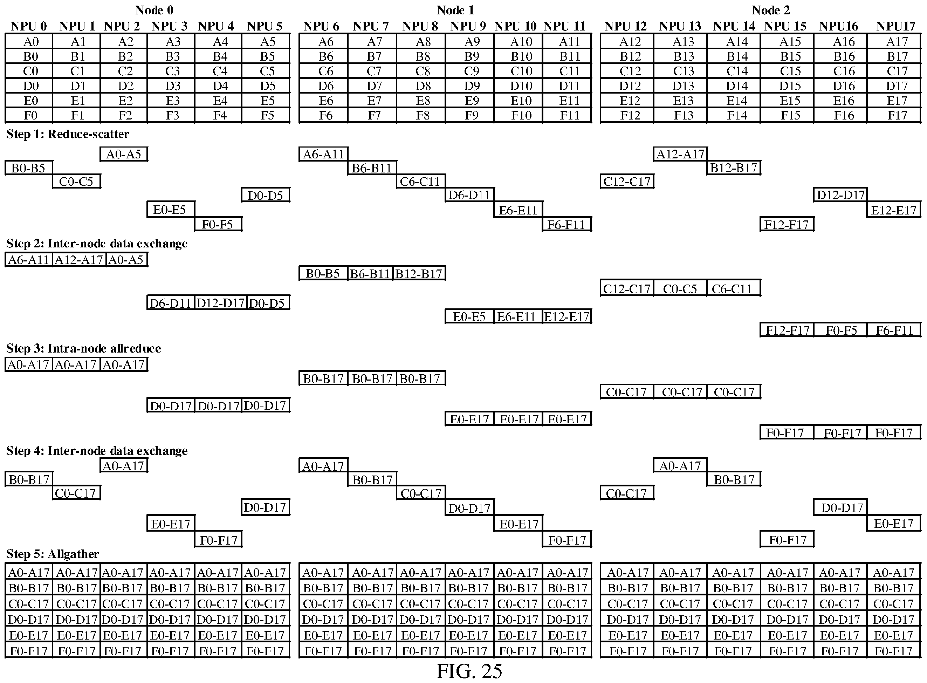

FIG. 25 is a schematic diagram of still another allreduce-based data aggregation. The system includes three nodes, each node includes six NPUs, and original data in each NPU may be divided into six portions. For specific node numbers, NPU numbers of NPUs in each node, and data numbers of data in each NPU, refer to FIG. 25.

For a connection relationship between the three nodes, refer to FIG. 9. There are two optical channels between any two nodes, that is, K = 2.

In reduce-scatter in step 1, the following operations are performed.

The first portion of data in each node needs to be aggregated to a node 0. Specifically, each NPU in the node 0 may aggregate the first portion of data in the NPU to an idle NPU (for example, an NPU 2) in this node. Each NPU in a node 1 may aggregate the first portion of data in the NPU to another NPU (for example, an NPU 6) that is in a node in which the NPU is located and that is connected to the node 0. Each NPU in a node 2 may aggregate the first portion of data in the NPU to another NPU (for example, an NPU 13) that is in a node in which the NPU is located and that is connected to the node 0.

Further, the fourth portion of data in each node also needs to be aggregated to the node 0. Specifically, each NPU in the node 0 may aggregate the fourth portion of data in the NPU to an idle NPU (for example, an NPU 5) in this node. Each NPU in the node 1 may aggregate the fourth portion of data in the NPU to another NPU (for example, an NPU 9) that is in a node in which the NPU is located and that is connected to the node 0. Each NPU in the node 2 may aggregate the fourth portion of data in the NPU to another NPU (for example, an NPU 16) that is in a node in which the NPU is located and that is connected to the node 0.

For a manner in which each node aggregates the second portion of data and the third portion of data in this node, refer to the foregoing manner in which the first portion of data is aggregated. For a manner in which each node aggregates the fifth portion of data and the sixth portion of data in this node, refer to the foregoing manner in which the fourth portion of data is aggregated. For an aggregation result of each node, refer to step 1 in FIG. 25.

It may be understood herein that each NPU divides the original data in the NPU into six portions, and the six portions of data may be divided into two groups, where the first portion of data to the third portion of data may be assigned to the first group, and the first group may correspond to three NPUs in a node in which the first group is located. Correspondingly, the fourth portion of data to the sixth portion of data may be assigned to the second group, and the second group may correspond to other three NPUs in a node in which the second group is located. The three NPUs corresponding to the first group are different from the three NPUs corresponding to the second group, so that each group transmits data by using NPUs corresponding to the group.

In inter-node data exchange in step 2, the following operations are performed.

The NPU 6 in the node 1 sends data A6 to A11 to an NPU 0 in the node 0, and the NPU 13 in the node 2 sends data A12 to A17 to an NPU 1 in the node 0. Therefore, three NPUs in the node 1 may respectively obtain A0 to A5, A6 to A11, and A12 to A17 corresponding to the first group. Similarly, other three NPUs in the node 1 may respectively obtain D0 to D5, D6 to D11, and D12 to D17 corresponding to the second group.

Three NPUs in the node 2 may respectively obtain B0 to B5, B6 to B11, and B12 to B17 corresponding to the first group. Other three NPUs in the node 2 may respectively obtain E0 to E5, E6 to E11, and E12 to E17 corresponding to the second group.

Three NPUs in the node 3 may respectively obtain C0 to C5, C6 to C11, and C12 to C17 corresponding to the first group. Other three NPUs in the node 3 may respectively obtain F0 to F5, F6 to F11, and F12 to F17 corresponding to the second group.

Alternatively, it may be understood that two interconnected NPUs exchange data, so that NPUs in each node obtain the data in step 2 in FIG. 25. For a manner of data exchange, refer to FIG. 21.

For specific implementations of intra-node allreduce in step 3, inter-node data exchange in step 4, and allgather in step 5, refer to descriptions in FIG. 20 to FIG. 23. For a result of each step, refer to FIG. 25, and details are not described again.

A difference between this embodiment of this application and FIG. 20 lies in that, in this embodiment of this application, a plurality of optical channels are constructed between any two nodes by using an OXC device. In addition, each NPU in each node may divide data in the NPU into a plurality of groups, and the NPU in the node may aggregate data in each group. This helps improve concurrency of data transmission, and improves data aggregation efficiency.

Example 4: Other

In addition, the total quantity N of NPUs in each node and the total quantity M of nodes may have a relationship other than that in the foregoing Example 1 to Example 3. Original data in each NPU may be divided into N portions of data. For the $I^{th}$ portion of data in the N portions of data, the NPU may determine, based on the $I^{th}$ portion of data and the total quantity M of nodes, a target node to which the $I^{th}$ portion of data is aggregated.

Specifically, the NPU may determine a result J of a modulo operation performed by I on M, and determine the $J^{th}$ node in the M nodes as the target node (that is, a second node) corresponding to the $I^{th}$ portion of data. Then, the NPU sends, based on another NPU that is in a node in which the NPU is located and that is connected to the target node, the $I^{th}$ portion of data to the another NPU connected to the target node, or when determining that the target node is a node in which the NPU is located, the NPU sends the $I^{th}$ portion of data to an idle NPU in the node in which the NPU is located.

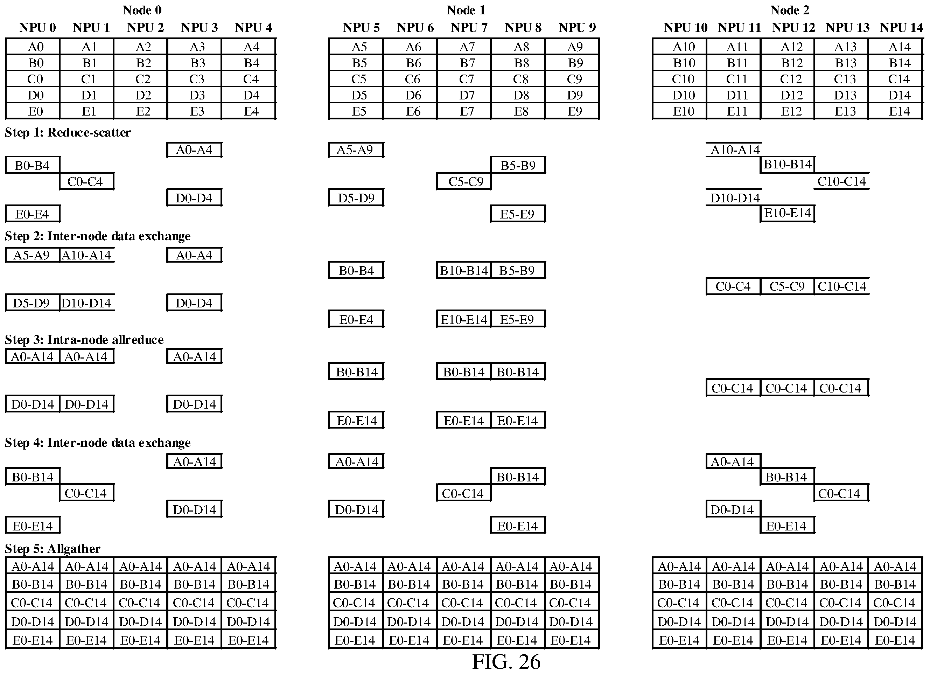

FIG. 26 is a schematic diagram of still another allreduce-based data aggregation. The computing cluster includes three nodes, each node includes five NPUs, and original data in each NPU may be divided into five portions. For specific node numbers, NPU numbers of NPUs in each node, and data numbers of data in each NPU, refer to FIG. 26.

For a connection relationship between the three nodes, refer to FIG. 12. There is one optical channel between any two nodes.

In reduce-scatter in step 1, the following operations are performed.

Specifically, an NPU determines that both the first portion of data and the fourth portion of data are aggregated to the $1^{st}$ node (a node 0).

Each NPU in an NPU 0 to an NPU 4 in the node 0 aggregates the first portion of data in the NPU to an idle NPU (that is, the NPU 3). Correspondingly, the NPU 3 includes data A0 to A4. Each NPU in the NPU 0 to the NPU 4 in the node 0 aggregates the fourth portion of data in the NPU to the idle NPU (that is, the NPU 3). Correspondingly, the NPU 3 further includes data D0 to D4.

Each NPU in an NPU 5 to an NPU 9 in a node 1 aggregates the first portion of data in the NPU to an NPU (that is, the NPU 5) connected to the node 0. Correspondingly, the NPU 5 includes data A5 to A9. Each NPU in the NPU 5 to the NPU 9 in the node 1 aggregates the fourth portion of data in the NPU to the NPU (that is, the NPU 5) connected to the node 0. Correspondingly, the NPU 5 further includes data D5 to D9.

Each NPU in an NPU 10 to an NPU 14 in a node 2 aggregates the first portion of data in the NPU to an NPU (that is, the NPU 11) connected to the node 0. Correspondingly, the NPU 11 includes data A10 to A14. Each NPU in the NPU 10 to the NPU 14 in the node 2 aggregates the fourth portion of data in the NPU to an NPU (that is, the NPU 11) connected to the node 0. Correspondingly, the NPU 11 further includes data D10 to D14.

Herein, the NPU 3 may process two portions of data A0 to A4 and D0 to D4, the NPU 5 may process two portions of data A5 to A9 and D5 to D9, and the NPU 11 may process two portions of data A10 to A14 and D10 to D14. In this way, data in each NPU is aggregated.

Similarly, the NPU determines that the second portion of data and the fifth portion of data need to be aggregated to the node 1, and performs intra-node reduce-scatter on the second portion of data and the fifth portion of data separately. The NPU determines that the third portion of data needs to be aggregated to the node 2, and performs intra-node reduce-scatter on the third portion of data.

An aggregation result finally obtained is shown in step 1 in FIG. 26. Further, for specific implementations of inter-node data exchange in step 2, intra-node allreduce in step 3, inter-node data exchange in step 4, and allgather in step 5, refer to descriptions in FIG. 20 to FIG. 23. For a result of each step, refer to FIG. 26, and details are not described again.

It should be added that, in the foregoing allreduce, there is a correspondence between the second node and the first data. For example, in FIG. 20, the first data is B0, and the second node corresponding to the data B0 is the node 1; the first data is C0, and the second node corresponding to the data C0 is the node 2; and the first data is D0, and the second node corresponding to the data D0 is the node 3. It may be considered that the first NPU first determines the first data, and then determines the second node based on the first data (or a relative position of the first data in a plurality of portions of data). Alternatively, it may be further considered that the first NPU first determines the second node, and then determines the first data based on the second node (or a relative position of the second node in a computing cluster). Alternatively, it may be further considered that the first NPU determines the first data to be sent to the second node. This description is also applicable to another collective communication algorithm.

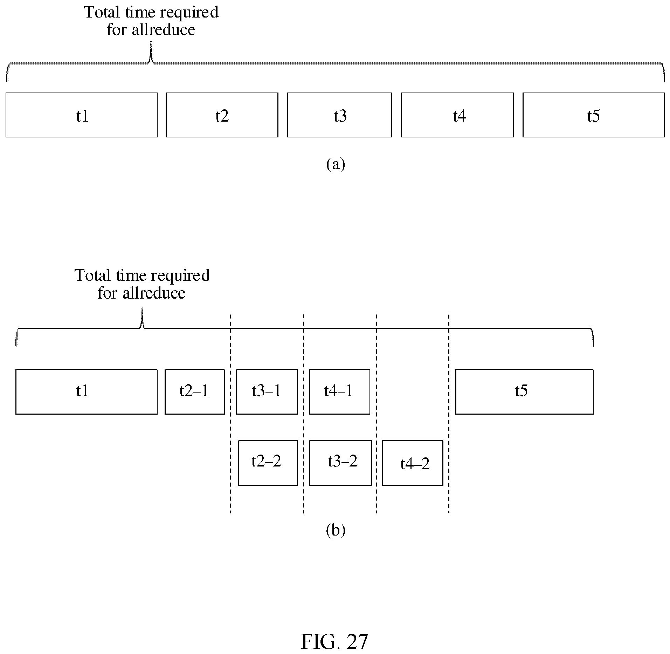

It should be further added that, in the foregoing allreduce, total time T required in the entire aggregation process is equal to a sum of time required in all steps. For example, according to a schematic diagram of time required for data transmission shown in (a) in FIG. 27, time required for reduce-scatter in step 1 is t1, time required for inter-node data exchange in step 2 is t2, time required for intra-node allreduce in step 3 is t3, time required for inter-node data exchange in step 4 is t4, and time required for allgather in step 5 is t5. Therefore, the total time is T = t1 + t2 + t3 + t4 + t5.

Further, intra-node data transmission and inter-node data transmission may be performed in a parallel manner to speed up allreduce-based aggregation, to reduce the total time T required for aggregation. For details, refer to (b) in FIG. 27 for a schematic diagram of time required for another data transmission. Any two NPUs (represented as an NPU a and an NPU b) that are connected to each other are used as an example for description.

In a process in which the NPU a performs step 2 for the first time, the NPU a may divide data to be transmitted by the NPU a into two portions, where the two portions of data are respectively represented as data a1 and data a2. The NPU a sends the data a1 to the NPU b through an inter-node bandwidth, and receives data in the NPU b. Likewise, the data (which may be referred to as data b1) received by the NPU a is either of two portions of data in the NPU b. Because a volume of data that needs to be exchanged between the NPU a and the NPU b is less than an original volume of data, time t2-1 required for the NPU a to perform step 2 for the first time may be less than the original time t2.

For example, the NPU a is the NPU 0 in FIG. 20. After step 1, the NPU 0 may include data B0 to B3, where a volume of the data B0 to B3 is 1 MB. The NPU 0 may divide the data B0 to B3 into two portions, and each portion of data is 512 KB. The NPU 0 sends one portion of data to the NPU 4, and the time t2-1 required therefor may be half of the time t2. The following steps are similar.

In a process in which the NPU a performs step 3 for the first time, the NPU a may transmit the data b1 to another NPU in this node through an intra-node bandwidth. Herein, because a volume of data transmitted by the NPU a to the another NPU in this node is less than an original volume of data, time t3-1 required for the NPU a to perform step 3 for the first time may be less than the original time t3.

In addition, the NPU a may further perform step 2 for the second time during the time t3-1. Specifically, the NPU a may send the data a2 to the NPU b, and receive data in the NPU b. Likewise, the data (which may be referred to as data b2) received by the NPU a is either of two portions of data in the NPU b. Because during the time t3-1, the intra-node bandwidth is used in step 3, and the inter-node bandwidth is used in step 2, the intra-node bandwidth and the inter-node bandwidth do not affect each other. Further, time t2-2 required by the NPU a to perform step 2 for the second time is also less than the original time t2.

In a process in which the NPU a performs step 4 for the first time, the NPU a may send data a3 obtained by performing step 3 for the first time to the NPU b through the inter-node bandwidth, and receive data in the NPU b. Likewise, the data received by the NPU a is data b3 obtained by the NPU b by performing step 3 for the first time. Because a volume of data that needs to be exchanged between the NPU a and the NPU b is less than an original volume of data, time t4-1 required for the NPU a to perform step 4 for the first time is less than the original time t4.

In addition, the NPU a may further perform step 3 for the second time during the time t4-1. Specifically, the NPU a may transmit the data b2 to the another NPU in this node through the intra-node bandwidth. Because during the time t4-1, the inter-node bandwidth is used in step 4, and the intra-node bandwidth is used in step 3, the intra-node bandwidth and the inter-node bandwidth do not affect each other. Further, because a volume of data transmitted by the NPU a to the another NPU in this node is less than an original volume of data, time t3-2 required for the NPU a to perform step 3 for the second time is less than the original time t3.

The NPU a performs step 4 again, that is, sends data a4 obtained by performing step 3 for the second time to the NPU b, and receives data (which may be referred to as data b4) in the NPU b. Further, time t4-2 required by the NPU a to perform step 4 again is less than the original time t4.

As described above, the total time required by the NPU a to perform the entire allreduce is T = t1 + t2-1 + t3-1 + t4-1 + t4-2 + t5. When t3-1 is less than t2-2, t3-1 may be replaced with t2-2. When t4-1 is less than t3-2, t4-1 may be replaced with t3-2. Alternatively, in a possible case, t3-1 may be equal to t2-2, and t4-1 may be equal to t3-2.

Compared with (a) in FIG. 27, the parallel manner in (b) in FIG. 27 may speed up allreduce-based aggregation and reduce the total time T required for aggregation.

2. Alltoall

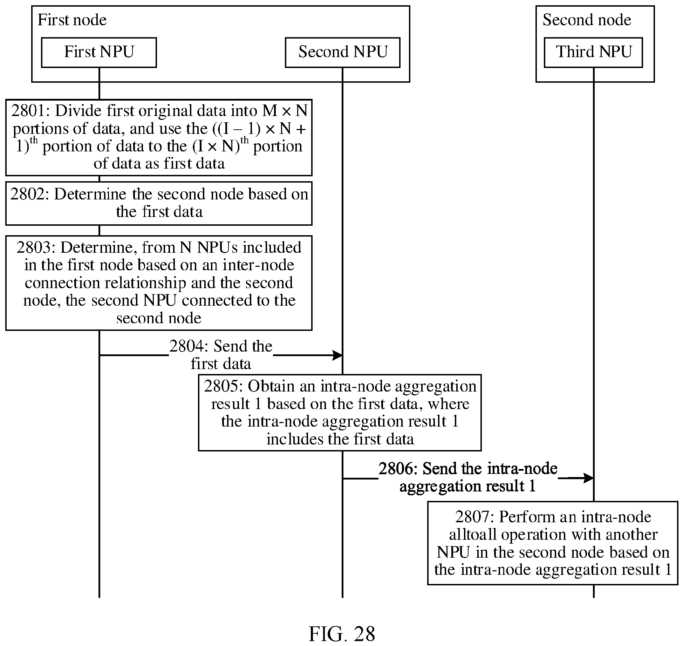

FIG. 28 is a schematic flowchart of alltoall-based data aggregation according to this application.

Step 2801: A first NPU divides first original data into M × N portions of data, and uses the $((I - 1) \times N + 1)^{th}$ portion of data to the $(I \times N)^{th}$ portion of data in the M × N portions of data as first data, where I is an integer in [1, M].

For example, M = 4, N = 4, that is, the first NPU divides the first original data into 16 portions of data. When I = 1, the $((I - 1) \times N + 1)^{th}$ portion to the $(I \times N)^{th}$ portion, that is, the first portion to the fourth portion, need to be transmitted to the $1^{st}$ node. When I = 2, the $((I - 1) \times N + 1)^{th}$ portion to the $(I \times N)^{th}$ portion, that is, the fifth portion to the eighth portion, need to be transmitted to a second node.

Step 2802: The first NPU determines the second node based on the first data.

The second node is the $J^{th}$ node in M nodes, and J is a result of a modulo operation performed by I on M, or may be expressed as J = I mod M.

Step 2803: The first NPU determines, from N NPUs included in a first node based on an inter-node connection relationship and the second node, a second NPU connected to the second node.

For an implementation of this step, refer to the description in step 1503.

Step 2804: The first NPU sends the first data to the second NPU. Correspondingly, the second NPU receives the first data from the first NPU. For an implementation of this step, refer to the description in step 1504.

Step 2805: The second NPU obtains an intra-node aggregation result 1 based on the first data.

It should be added that, another NPU other than the first NPU in the first node may also divide original data in the another NPU into M × N portions of data, and select the $((I - 1) \times N + 1)^{th}$ portion of data to the $(I \times N)^{th}$ portion of data from the M × N portions of data obtained through division. Further, if the another NPU is not the second NPU, the another NPU may send the $((I - 1) \times N + 1)^{th}$ portion of data to the $(I \times N)^{th}$ portion of data to the second NPU. Correspondingly, the second NPU may not only receive the first data from the first NPU, but also receive the $((I - 1) \times N + 1)^{th}$ portion of data to the $(I \times N)^{th}$ portion of data in the another NPU other than the first NPU in the first node.

Correspondingly, the second NPU may obtain the intra-node aggregation result 1 based on the $((I - 1) \times N + 1)^{th}$ portion of data to the $(I \times N)^{th}$ portion of data in each NPU in the first node. For example, the intra-node aggregation result 1 includes the $((I - 1) \times N + 1)^{th}$ portion of data to the $(I \times N)^{th}$ portion of data in each NPU in the first node.

In a possible implementation, any two adjacent NPUs in the first node are directly connected, and an NPU in the first node may aggregate the $((I - 1) \times N + 1)^{th}$ portion of data to the $(I \times N)^{th}$ portion of data in each NPU to the second NPU by using a ring algorithm. For a specific implementation, refer to the description of the ring algorithm in the foregoing allreduce.

In another possible implementation, any two NPUs in the first node are directly connected, and an NPU in the first node may aggregate the $((I - 1) \times N + 1)^{th}$ portion of data to the $(I \times N)^{th}$ portion of data in each NPU to the second NPU by using a fullmesh algorithm. For a specific implementation, refer to the description of the fullmesh algorithm in the foregoing allreduce.

Step 2806: The second NPU sends the intra-node aggregation result 1 to a third NPU in the second node. Correspondingly, the third NPU in the second node receives the intra-node aggregation result 1.

It should be added that an NPU in the second node may be further connected to another node, and the NPU in the second node may further receive an intra-node aggregation result from the another node. Correspondingly, the second node may include an intra-node aggregation result of the $((I - 1) \times N + 1)^{th}$ portion of data to the $(I \times N)^{th}$ portion of data in each NPU in the M nodes.

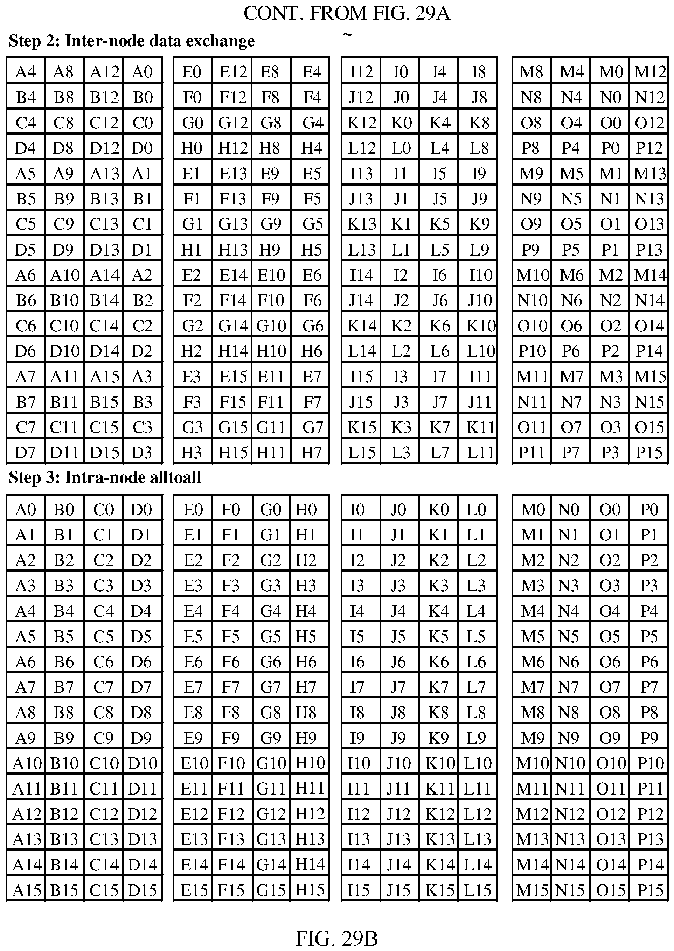

Step 2807: The third NPU performs an intra-node alltoall operation with another NPU in the second node based on the intra-node aggregation result 1. For the final aggregation result included in the second node, refer to the description of step 3 in FIG. 29B.

In addition, the first NPU may be further connected to a fourth NPU in a third node. The first NPU may receive second data from the fourth NPU, where the second data includes the $((I' - 1) \times N + 1)^{th}$ portion of data to the $(I' \times N)^{th}$ portion of data in each NPU in the third node, and I' is an integer in [1, M]. The first node is the $J'^{th}$ node in the M NPUs, and J' is a result of a modulo operation performed by I' on M. The first NPU performs the intra-node alltoall operation with another NPU in the first node based on the second data. For an implementation in which the fourth NPU determines the second data, refer to the description about how the second NPU obtains the intra-node aggregation result 1.

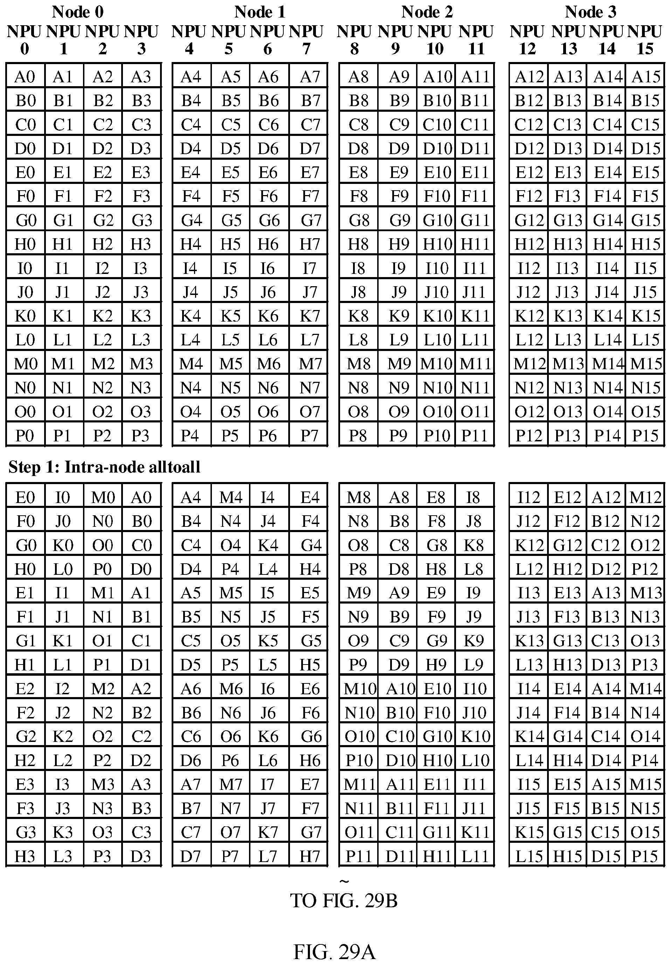

FIG. 29A and FIG. 29B are a schematic diagram of alltoall-based data aggregation. The computing cluster includes four nodes. For a connection relationship between the four nodes, refer to FIG. 6. Each node includes four NPUs, and original data in each NPU is divided into 16 portions. For specific node numbers, NPU numbers of NPUs in each node, and data numbers of data in each NPU, refer to FIG. 29A and FIG. 29B.

In intra-node alltoall in step 1, the following operations are performed.

For any NPU, the following step may be performed: The NPU selects the first portion of data to the fourth portion of data from the 16 portions of data in the NPU, where I = 1. The NPU determines to aggregate the first portion of data to the fourth portion of data to a node 0. Then, the NPU further determines another NPU that is in a node in which the NPU is located and that is connected to the node 0, and sends the first portion of data to the fourth portion of data to the another NPU, or when determining that the node 0 is a node in which the NPU is located, the NPU sends the first portion of data to the fourth portion of data to an idle NPU in a node in which the NPU is located.

Specifically, each NPU in an NPU 0 to an NPU 3 in the node 0 sends the first portion of data to the fourth portion of data in the NPU to the idle NPU (that is, the NPU 3). Correspondingly, the NPU 3 includes data A0 to D0, A1 to D1, A2 to D2, and A3 to D3.

Each NPU in an NPU 4 to an NPU 7 in a node 1 sends the first portion of data to the fourth portion of data in the NPU to an NPU (that is, the NPU 4) connected to the node 0. Correspondingly, the NPU 4 includes data A4 to D4, A5 to D5, A6 to D6, and A7 to D7.

Each NPU in an NPU 8 to an NPU 11 in a node 2 sends the first portion of data to the fourth portion of data in the NPU to an NPU (that is, the NPU 9) connected to the node 0. Correspondingly, the NPU 9 includes data A8 to D8, A9 to D9, A10 to D10, and A11 to D11.

Each NPU in an NPU 12 to an NPU 15 in a node 3 sends the first portion of data to the fourth portion of data in the NPU to an NPU (that is, the NPU 14) connected to the node 0. Correspondingly, the NPU 14 includes data A12 to D12, A13 to D13, A14 to D14, and A15 to D15.

For how each node in the node 1 to the node 3 performs intra-node aggregation on the fifth portion of data to the eighth portion of data, the ninth portion of data to the 12th portion of data, and the 13th portion of data to the 16th portion of data in the node, refer to the foregoing description about how each node performs intra-node aggregation on the first portion of data to the fourth portion of data in the node.

Further, an intra-node aggregation manner for each node may be implemented by using a ring algorithm, a fullmesh algorithm, or another algorithm.

In inter-node data exchange in step 2, the following operations are performed.

The NPU 4 in the node 1 sends the data A4 to D4, A5 to D5, A6 to D6, and A7 to D7 to the NPU 0 in the node 0, the NPU 9 in the node 2 sends the data A8 to D8, A9 to D9, A10 to D10, and A11 to D11 to the NPU 1 in the node 0, and the NPU 14 in the node 3 sends the data A12 to D12, A13 to D13, A14 to D14, and A15 to D15 to the NPU 2 in the node 0, so that the four NPUs in the node 0 may respectively obtain:

A0 to D0, A1 to D1, A2 to D2, and A3 to D3;
A4 to D4, A5 to D5, A6 to D6, and A7 to D7;
A8 to D8, A9 to D9, A10 to D10, and A11 to D11; and
A12 to D12, A13 to D13, A14 to D14, and A15 to D15.

Similarly, the four NPUs in the node 1 may respectively obtain:

E0 to H0, E1 to H1, E2 to H2, and E3 to H3;
E4 to H4, E5 to H5, E6 to H6, and E7 to H7;
E8 to H8, E9 to H9, E10 to H10, and E11 to H11; and
E12 to H12, E13 to H13, E14 to H14, and E15 to H15.

The four NPUs in the node 2 may respectively obtain:

I0 to L0, I1 to L1, I2 to L2, and I3 to L3;
I4 to L4, I5 to L5, I6 to L6, and I7 to L7;
I8 to L8, I9 to L9, I10 to L10, and I11 to L11; and
I12 to L12, I13 to L13, I14 to L14, and I15 to L15.

The four NPUs in the node 3 may respectively obtain:

M0 to P0, M1 to P1, M2 to P2, and M3 to P3;
M4 to P4, M5 to P5, M6 to P6, and M7 to P7;
M8 to P8, M9 to P9, M10 to P10, and M11 to P11; and
M12 to P12, M13 to P13, M14 to P14, and M15 to P15.

Alternatively, as shown in FIG. 21, the NPU 0 in the node 0 and the NPU 4 in the node 1 may exchange data through an optical channel between the NPU 0 and the NPU 4; the NPU 1 in the node 0 and the NPU 9 in the node 2 may exchange data through an optical channel between the NPU 1 and the NPU 9; the NPU 2 in the node 0 and the NPU 14 in the node 3 may exchange data through an optical channel between the NPU 2 and the NPU 14; and the like.

In intra-node alltoall in step 3, the following operations are performed.

The node 0 performs an alltoall operation based on the following data in this node: A0 to D0, A1 to D1, A2 to D2, and A3 to D3; A4 to D4, A5 to D5, A6 to D6, and A7 to D7; A8 to D8, A9 to D9, A10 to D10, and A11 to D11; and A12 to D12, A13 to D13, A14 to D14, and A15 to D15, so that the four NPUs in the node 0 respectively include data A0 to A15, B0 to B15, C0 to C15, and D0 to D15.

Similarly, each node in the node 1 to the node 3 performs the intra-node alltoall operation, so that the four NPUs in the node 1 respectively include data E0 to E15, F0 to F15, G0 to G15, and H0 to H15, the four NPUs in the node 2 respectively include data I0 to I15, J0 to J15, K0 to K15, and L0 to L15, and the four NPUs in the node 3 respectively include data M0 to M15, N0 to N15, O0 to O15, and P0 to P15.

In FIG. 29A and FIG. 29B, it may be understood that, after each NPU in each node completes data division, data in all NPUs may form a $16 \times 16$ data matrix. After the three steps in FIG. 29A and FIG. 29B, the $16 \times 16$ data matrix may be transposed to obtain a result shown in step 3. Specifically, original data A0 to P0 in the NPU 0 is transposed to the first row of the NPU 0 to the NPU 15, original data A1 to P1 in the NPU 0 is transposed to the second row of the NPU 0 to the NPU 15, and the like.

Based on the foregoing content and a same concept, this application provides a computing cluster, including a first node and a second node, where the first node includes a first processor and a second processor, and the second processor is connected to a third processor in the second node. The first processor is configured to: determine that first data in the first processor needs to be transmitted to the second node; and transmit the first data to the second processor. The second processor is configured to transmit the first data or processed first data to the third processor in the second node.

In a possible implementation, the second processor and the third processor are connected via an OXC device.

In a possible implementation, the first node includes a topology between a processor in the first node and another node, and the topology includes a connection relationship between the second processor and the third processor. When transmitting the first data to the second processor, the first processor is specifically configured to transmit the first data to the second processor based on the connection relationship between the second processor and the third processor in the topology.

In a possible implementation, the first node includes a topology between a processor in the first node and another node, the topology includes a one-to-one connection relationship between k processors in the first node and k processors in the second node, and k is an integer greater than 1. When transmitting the first data to the second processor, the first processor is specifically configured to: use the k processors in the first node as k candidate processors based on the one-to-one connection relationship between the k processors in the first node and the k processors in the second node in the topology; select the second processor from the k candidate processors; and transmit the first data to the second processor.

In a possible implementation, data transmission between the first node and the second node is performed by using an allreduce interface in an MPI, the computing cluster includes M nodes, each node includes N processors, data in each processor is divided into N portions of data, and the first data is the $I^{th}$ portion of data in the N portions of data.

When determining that the first data in the first processor needs to be transmitted to the second node, the first processor is specifically configured to: perform a modulo operation on M by using I to obtain a remainder J; and determine the $J^{th}$ node in the computing cluster as the second node. N is an integer greater than 1, I is an integer greater than or equal to 1, and M is an integer greater than 1. In a possible implementation, the second processor is further configured to aggregate the first data and the $I^{th}$ portion of data in each of other N - 1 processors in the first node.

In a possible implementation, data transmission between the first node and the second node is performed by using an alltoall interface in a message passing interface MPI, the computing cluster includes M nodes, each node includes N processors, data in each processor is divided into $M \times N$ portions of data, and the first data is the $(I \times N)^{th}$ portion of data to the $((I + 1) \times N - 1)^{th}$ portion of data in the $M \times N$ portions of data. When determining that the first data in the first processor needs to be transmitted to the second node, the first processor is specifically configured to: perform a modulo operation on M by using I to obtain a remainder J; and determine the $J^{th}$ node in the computing cluster as the second node. N is an integer greater than 1, I is an integer greater than or equal to 1, and M is an integer greater than 1.

Based on the foregoing content and a same concept, this application provides a computing node in a computing cluster. The computing node is, for example, a first node. The first node includes a first processor and a second processor, where the second processor is connected to a third processor in the second node in the computing cluster. The first processor is configured to: determine that first data in the first processor needs to be transmitted to the second node; and transmit the first data to the second processor. The second processor is configured to transmit the first data or processed first data to the third processor in the second node.

In a possible implementation, the second processor and the third processor are connected via an OXC device.

In a possible implementation, the first node includes a topology between a processor in the first node and another node, and the topology includes a connection relationship between the second processor and the third processor. When transmitting the first data to the second processor, the first processor is specifically configured to transmit the first data to the second processor based on the connection relationship between the second processor and the third processor in the topology.

In a possible implementation, the first node includes a topology between a processor in the first node and another node, the topology includes a one-to-one connection relationship between k processors in the first node and k processors in the second node, and k is an integer greater than 1. When transmitting the first data to the second processor, the first processor is specifically configured to: use the k processors in the first node as k candidate processors based on the one-to-one connection relationship between the k processors in the first node and the k processors in the second node in the topology; select the second processor from the k candidate processors; and transmit the first data to the second processor.

In a possible implementation, data transmission between the first node and the second node is performed by using an allreduce interface in an MPI, the computing cluster includes M nodes, each node includes N processors, data in each processor is divided into N portions of data, and the first data is the $I^{th}$ portion of data in the N portions of data.

When determining that the first data in the first processor needs to be transmitted to the second node, the first processor is specifically configured to: perform a modulo operation on M by using I to obtain a remainder J; and determine the $J^{th}$ node in the computing cluster as the second node. N is an integer greater than 1, I is an integer greater than or equal to 1, and M is an integer greater than 1. In a possible implementation, the second processor is further configured to aggregate the first data and the $I^{th}$ portion of data in each of other N - 1 processors in the first node.

In a possible implementation, data transmission between the first node and the second node is performed by using an alltoall interface in an MPI, the computing cluster includes M nodes, each node includes N processors, data in each processor is divided into M × N portions of data, and the first data is the $(I \times N)^{th}$ portion of data to the $((I + 1) \times N - 1)^{th}$ portion of data in the M × N portions of data. When determining that the first data in the first processor needs to be transmitted to the second node, the first processor is specifically configured to: perform a modulo operation on M by using I to obtain a remainder J; and determine the $J^{th}$ node in the computing cluster as the second node. N is an integer greater than 1, I is an integer greater than or equal to 1, and M is an integer greater than 1.

Based on the foregoing content and a same concept, this application provides a computer-readable storage medium. The computer-readable storage medium stores a computer program or instructions. When the computer program or the instructions are executed by an apparatus, the apparatus performs a function of the computing node (for example, a first node) in the related method embodiments in FIG. 15 to FIG. 29A and FIG. 29B.

Based on the foregoing content and a same concept, this application provides a computer program product. The computer program product includes a computer program or instructions. When the computer program or the instructions are executed by an apparatus, the apparatus performs a function of the computing node (for example, a first node) in the related method embodiments in FIG. 15 to FIG. 29A and FIG. 29B.

It may be understood that numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the following claims of this application and their equivalent technologies.

**Claims**

1. A collective communication method, applied to a computing cluster, wherein the computing cluster comprises a first node and a second node, the first node comprises a first processor and a second processor, and the second processor is connected to a third processor in the second node; and
   the method comprises:

   determining, by the first processor, that first data in the first processor needs to be transmitted to the second node;
   transmitting, by the first processor, the first data to the second processor; and
   transmitting, by the second processor, the first data or processed first data to the third processor in the second node.

2. The method according to claim 1, wherein the second processor and the third processor are connected via an optical cross-connect OXC device.

3. The method according to claim 1 or 2, wherein the first node comprises a topology between a processor in the first node and another node, and the topology comprises a connection relationship between the second processor and the third processor; and
the transmitting, by the first processor, the first data to the second processor comprises:
transmitting, by the first processor, the first data to the second processor based on the connection relationship between the second processor and the third processor in the topology.

4. The method according to claim 1 or 2, wherein the first node comprises a topology between a processor in the first node and another node, the topology comprises a one-to-one connection relationship between k processors in the first node and k processors in the second node, and k is an integer greater than 1; and
the transmitting, by the first processor, the first data to the second processor comprises:

using, by the first processor, the k processors in the first node as k candidate processors based on the one-to-one connection relationship between the k processors in the first node and the k processors in the second node in the topology;
selecting, by the first processor, the second processor from the k candidate processors; and
transmitting, by the first processor, the first data to the second processor.

5. The method according to any one of claims 1 to 3, wherein data transmission between the first node and the second node is performed by using an allreduce interface in a message passing interface MPI, the computing cluster comprises M nodes, each node comprises N processors, data in each processor is divided into N portions of data, and the first data is the $I^{th}$ portion of data in the N portions of data; and
the determining, by the first processor, that first data in the first processor needs to be transmitted to the second node comprises:

performing, by the first processor, a modulo operation on M by using I to obtain a remainder J; and
determining, by the first processor, the $J^{th}$ node in the computing cluster as the second node, wherein
N is an integer greater than 1, I is an integer greater than or equal to 1, and M is an integer greater than 1.

6. The method according to claim 4, wherein the method further comprises:
aggregating, by the second processor, the first data and the $I^{th}$ portion of data in each of other N - 1 processors in the first node.

7. The method according to any one of claims 1 to 3, wherein data transmission between the first node and the second node is performed by using an alltoall interface in a message passing interface MPI, the computing cluster comprises M nodes, each node comprises N processors, data in each processor is divided into M × N portions of data, and the first data is the $(I \times N)^{th}$ portion of data to the $((I + 1) \times N - 1)^{th}$ portion of data in the M × N portions of data; and
the determining, by the first processor, that first data in the first processor needs to be transmitted to the second node comprises:

performing, by the first processor, a modulo operation on M by using I to obtain a remainder J; and
determining, by the first processor, the $J^{th}$ node in the computing cluster as the second node, wherein
N is an integer greater than 1, I is an integer greater than or equal to 1, and M is an integer greater than 1.

8. A computing cluster, comprising a first node and a second node, wherein the first node comprises a first processor and a second processor, and the second processor is connected to a third processor in the second node;

the first processor is configured to: determine that first data in the first processor needs to be transmitted to the second node; and transmit the first data to the second processor; and
the second processor is configured to transmit the first data or processed first data to the third processor in the second node.

9. The computing cluster according to claim 8, wherein the second processor and the third processor are connected via an optical cross-connect OXC device.

10. The computing cluster according to claim 8 or 9, wherein the first node comprises a topology between a processor in the first node and another node, and the topology comprises a connection relationship between the second processor and the third processor; and
when transmitting the first data to the second processor, the first processor is specifically configured to:
transmit the first data to the second processor based on the connection relationship between the second processor and the third processor in the topology.

11. The computing cluster according to claim 8 or 9, wherein the first node comprises a topology between a processor in the first node and another node, the topology comprises a one-to-one connection relationship between k processors in the first node and k processors in the second node, and k is an integer greater than 1; and
when transmitting the first data to the second processor, the first processor is specifically configured to:

use the k processors in the first node as k candidate processors based on the one-to-one connection relationship between the k processors in the first node and the k processors in the second node in the topology;
select the second processor from the k candidate processors; and
transmit the first data to the second processor.

12. The computing cluster according to any one of claims 8 to 11, wherein data transmission between the first node and the second node is performed by using an allreduce interface in a message passing interface MPI, the computing cluster comprises M nodes, each node comprises N processors, data in each processor is divided into N portions of data, and the first data is the $I^{th}$ portion of data in the N portions of data; and
when determining that the first data in the first processor needs to be transmitted to the second node, the first processor is specifically configured to: perform a modulo operation on M by using I to obtain a remainder J; and determine the $J^{th}$ node in the computing cluster as the second node, wherein N is an integer greater than 1, I is an integer greater than or equal to 1, and M is an integer greater than 1.

13. The computing cluster according to claim 12, wherein the second processor is further configured to aggregate the first data and the $I^{th}$ portion of data in each of other N - 1 processors in the first node.

14. The computing cluster according to any one of claims 8 to 11, wherein data transmission between the first node and the second node is performed by using an alltoall interface in a message passing interface MPI, the computing cluster comprises M nodes, each node comprises N processors, data in each processor is divided into M × N portions of data, and the first data is the $(I \times N)^{th}$ portion of data to the $((I + 1) \times N - 1)^{th}$ portion of data in the M × N portions of data; and
when determining that the first data in the first processor needs to be transmitted to the second node, the first processor is specifically configured to: perform a modulo operation on M by using I to obtain a remainder J; and determine the $J^{th}$ node in the computing cluster as the second node, wherein N is an integer greater than 1, I is an integer greater than or equal to 1, and M is an integer greater than 1.

15. A computing node, comprised in a computing cluster, wherein the computing node comprises a first processor and a second processor, and the second processor is connected to a third processor in a second node in the computing cluster

the first processor is configured to: determine that first data in the first processor needs to be transmitted to the second node; and transmit the first data to the second processor; and
the second processor is configured to transmit the first data or processed first data to the third processor in the second node.

16. The computing node according to claim 15, wherein the second processor and the third processor are connected via an optical cross-connect OXC device.

17. The computing node according to claim 15 or 16, wherein the first node comprises a topology between a processor in the first node and another node, and the topology comprises a connection relationship between the second processor and the third processor; and
when transmitting the first data to the second processor, the first processor is specifically configured to:
transmit the first data to the second processor based on the connection relationship between the second processor and the third processor in the topology.

18. The computing node according to claim 15 or 16, wherein the first node comprises a topology between a processor in the first node and another node, the topology comprises a one-to-one connection relationship between k processors in the first node and k processors in the second node, and k is an integer greater than 1; and
when transmitting the first data to the second processor, the first processor is specifically configured to:

use the k processors in the first node as k candidate processors based on the one-to-one connection relationship between the k processors in the first node and the k processors in the second node in the topology;
select the second processor from the k candidate processors; and
transmit the first data to the second processor.

19. The computing node according to any one of claims 15 to 18, wherein data transmission between the first node and the second node is performed by using an allreduce interface in a message passing interface MPI, the computing cluster comprises M nodes, each node comprises N processors, data in each processor is divided into N portions of data, and the first data is the $I^{th}$ portion of data in the N portions of data; and

when determining that the first data in the first processor needs to be transmitted to the second node, the first processor is specifically configured to: perform a modulo operation on M by using I to obtain a remainder J; and determine the $J^{th}$ node in the computing cluster as the second node, wherein N is an integer greater than 1, I is an integer greater than or equal to 1, and M is an integer greater than 1.

20. The computing node according to claim 19, wherein the second processor is further configured to aggregate the first data and the $I^{th}$ portion of data in each of other N - 1 processors in the first node.

21. The computing node according to any one of claims 15 to 18, wherein data transmission between the first node and the second node is performed by using an alltoall interface in a message passing interface MPI, the computing cluster comprises M nodes, each node comprises N processors, data in each processor is divided into M × N portions of data, and the first data is the $(I \times N)^{th}$ portion of data to the $((I + 1) \times N - 1)^{th}$ portion of data in the M × N portions of data; and

when determining that the first data in the first processor needs to be transmitted to the second node, the first processor is specifically configured to: perform a modulo operation on M by using I to obtain a remainder J; and determine the $J^{th}$ node in the computing cluster as the second node, wherein N is an integer greater than 1, I is an integer greater than or equal to 1, and M is an integer greater than 1.

22. A computer program product, wherein the computer program product comprises a computer program or instructions, and when the computer program or the instructions are executed by an apparatus, the apparatus implements a function of the first processor or the second processor in the computing node according to any one of claims 15 to 21.

**Computing cluster 1**

Node 00

| Processor 000 | Processor 001 | Processor 002 | Processor 003 | ... |

Node 10

| Processor 100 | Processor 101 | Processor 102 | Processor 103 | ... |

Node 20

| Processor 200 | Processor 201 | Processor 202 | Processor 203 | ... |

Node 30

| Processor 300 | Processor 301 | Processor 302 | Processor 303 | ... |

FIG. 1

Optical port 7
Optical port 8
Optical port 9
Optical port 10
Optical port 11
Optical port 12

MEMS
micromirror

Optical signal 1

Optical signal 2

Optical port 1
Optical port 2
Optical port 3
Optical port 4
Optical port 5
Optical port 6

FIG. 2

x → $f_0$ → $y_0$ → $f_1$ → $y_1$ $\cdots$ $y_{K-2}$ → $f_{K-1}$ → $y_{K-1}$

$w_0$

$w_1$

$w_{K-1}$

FIG. 3

EP 4 446 881 A1

| Node 0 | | | | Node 1 | | | | Node 2 | | | | Node 3 | | | |
|---|---|---|---|---|---|---|---|---|---|---|---|---|---|---|---|
| NPU 0 | NPU 1 | NPU 2 | NPU 3 | NPU 4 | NPU 5 | NPU 6 | NPU 7 | NPU 8 | NPU 9 | NPU 10 | NPU 11 | NPU 12 | NPU 13 | NPU 14 | NPU 15 |
| A0 | A1 | A2 | A3 | A4 | A5 | A6 | A7 | A8 | A9 | A10 | A11 | A12 | A13 | A14 | A15 |
| B0 | B1 | B2 | B3 | B4 | B5 | B6 | B7 | B8 | B9 | B10 | B11 | B12 | B13 | B14 | B15 |
| C0 | C1 | C2 | C3 | C4 | C5 | C6 | C7 | C8 | C9 | C10 | C11 | C12 | C13 | C14 | C15 |
| D0 | D1 | D2 | D3 | D4 | D5 | D6 | D7 | D8 | D9 | D10 | D11 | D12 | D13 | D14 | D15 |

**Intra-node reduce-scatter**

Node 0: A0-A3, B0-B3, C0-C3, D0-D3
Node 1: A4-A7, B4-B7, C4-C7, D4-D7
Node 2: A8-A11, B8-B11, C8-C11, D8-D11
Node 3: A12-A15, B12-B15, C12-C15, D12-D15

**Inter-node allreduce operation**

Node 0: A0-A15, B0-B15, C0-C15, D0-D15
Node 1: A0-A15, B0-B15, C0-C15, D0-D15
Node 2: A0-A15, B0-B15, C0-C15, D0-D15
Node 3: A0-A15, B0-B15, C0-C15, D0-D15

**Intra-node allgather operation**

| A0-A15 | A0-A15 | A0-A15 | A0-A15 | A0-A15 | A0-A15 | A0-A15 | A0-A15 | A0-A15 | A0-A15 | A0-A15 | A0-A15 | A0-A15 | A0-A15 | A0-A15 | A0-A15 |
|---|---|---|---|---|---|---|---|---|---|---|---|---|---|---|---|
| B0-B15 | B0-B15 | B0-B15 | B0-B15 | B0-B15 | B0-B15 | B0-B15 | B0-B15 | B0-B15 | B0-B15 | B0-B15 | B0-B15 | B0-B15 | B0-B15 | B0-B15 | B0-B15 |
| C0-C15 | C0-C15 | C0-C15 | C0-C15 | C0-C15 | C0-C15 | C0-C15 | C0-C15 | C0-C15 | C0-C15 | C0-C15 | C0-C15 | C0-C15 | C0-C15 | C0-C15 | C0-C15 |
| D0-D15 | D0-D15 | D0-D15 | D0-D15 | D0-D15 | D0-D15 | D0-D15 | D0-D15 | D0-D15 | D0-D15 | D0-D15 | D0-D15 | D0-D15 | D0-D15 | D0-D15 | D0-D15 |

FIG. 4

FIG. 5

FIG. 6

FIG. 7

FIG. 8

FIG. 9

FIG. 10

FIG. 11

FIG. 12

FIG. 13

EP 4 446 881 A1

(a)

(b)

FIG. 14

| First node | |
|---|---|
| First NPU | Second NPU |

Second node

Third NPU

1501: The first NPU determines first data based on first original data

1502: Determine the second node based on the first data, where the second node is a target node to which the first NPU transmits the first data in data aggregation

1503: Determine, from N NPUs included in the first node based on an inter-node connection relationship and the second node, the second NPU connected to the second node

1504: Send the first data

1504-a: Process the first data, and obtain processed first data

**1505: Send the first data, or send the processed first data**

FIG. 15

First node

First NPU | Second NPU

Second node

Third NPU

1601: Divide first original data based on a total quantity M of nodes and a total quantity N of NPUs in each node, and then select the $I^{th}$ portion of data from a plurality of portions of data obtained through division as first data

1602: Determine the second node based on the first data

1603: Determine, from N NPUs included in the first node based on an inter-node connection relationship and the second node, the second NPU connected to the second node

1604: Send the first data

1605: Aggregate the first data to obtain an intra-node aggregation result A, where the intra-node aggregation result A includes the first data obtained through aggregation

1606: Send the intra-node aggregation result A

1607: Perform aggregation based on the intra-node aggregation result A to obtain an inter-node aggregation result A

1608: Send the inter-node aggregation result A

1609: Broadcast the inter-node aggregation result A

FIG. 16

| NPU (j − 1) | NPU j | NPU (j + 1) |
|---|---|---|

1701: The NPU j determines the n2$^{th}$ portion of data in the NPU j as to-be-sent data based on a round i and a connection relationship between an NPU (j − i − 1) and an NPU in the n2$^{th}$ node in M nodes

1703: Send data in the NPU (j − 1)

1702: Send the to-be-sent data

1704: The NPU j updates the data in the NPU (j − 1) to the n1$^{th}$ portion of data in the NPU j based on the round i and a connection relationship between an NPU (j − i − 2) and an NPU in the n1$^{th}$ node in the M nodes

FIG. 17

| NPU 0 | NPU 1 | NPU 2 | NPU 3 |
|---|---|---|---|
| A0 | A1 | A2 | A3 |
| B0 | B1 | B2 | B3 |
| C0 | C1 | C2 | C3 |
| D0 | D1 | D2 | D3 |

First round (Round 0)

| | | | |
|---|---|---|---|
| | A0+A1 | A2 | A3 |
| B0 | | B1+B2 | B3 |
| C0 | C1 | | C2+C3 |
| D0+D3 | D1 | D2 | |

Second round (Round 1)

| | | | |
|---|---|---|---|
| | | A0+A1+A2 | A3 |
| B0 | | | B1+B2+B3 |
| C0+C2+C3 | C1 | | |
| | D1+D0+D3 | D2 | |

Third round (Round 2)

| | | | |
|---|---|---|---|
| | | | A0-A3 |
| B0-B3 | | | |
| | C0-C3 | | |
| | | D0-D3 | |

FIG. 18

| NPU 0 | |
|---|---|
| B0 | |
| C0 | |
| D0 | |

| | NPU 2 |
|---|---|
| B2 | |
| C2 | |
| D2 | |

A0

A2

| NPU 1 | |
|---|---|
| | |
| B1 | |
| C1 | |
| D1 | |

A1

| | NPU 3 |
|---|---|
| A3 | |
| B3 | |
| C3 | |
| D3 | |

FIG. 19

EP 4 446 881 A1

**Node 0**

| NPU 0 | NPU 1 | NPU 2 | NPU 3 |
|---|---|---|---|
| A0 | A1 | A2 | A3 |
| B0 | B1 | B2 | B3 |
| C0 | C1 | C2 | C3 |
| D0 | D1 | D2 | D3 |

**Node 1**

| NPU 4 | NPU 5 | NPU 6 | NPU 7 |
|---|---|---|---|
| A4 | A5 | A6 | A7 |
| B4 | B5 | B6 | B7 |
| C4 | C5 | C6 | C7 |
| D4 | D5 | D6 | D7 |

**Node 2**

| NPU 8 | NPU 9 | NPU 10 | NPU 11 |
|---|---|---|---|
| A8 | A9 | A10 | A11 |
| B8 | B9 | B10 | B11 |
| C8 | C9 | C10 | C11 |
| D8 | D9 | D10 | D11 |

**Node 3**

| NPU 12 | NPU 13 | NPU 14 | NPU 15 |
|---|---|---|---|
| A12 | A13 | A14 | A15 |
| B12 | B13 | B14 | B15 |
| C12 | C13 | C14 | C15 |
| D12 | D13 | D14 | D15 |

**Step 1: Reduce-scatter**

Node 0: A0-A3 (NPU 3); B0-B3 (NPU 0); C0-C3 (NPU 1); D0-D3 (NPU 2)
Node 1: A4-A7 (NPU 4); B4-B7 (NPU 7); C4-C7 (NPU 6); D4-D7 (NPU 5)
Node 2: A8-A11 (NPU 8); B8-B11 (NPU 9); C8-C11 (NPU 11); D8-D11 (NPU 8)
Node 3: A12-A15 (NPU 14); B12-B15 (NPU 13); C12-C15 (NPU 12); D12-D15 (NPU 15)

**Step 2: Inter-node data exchange**

Node 0: A4-A7 | A8-A11 | A12-A15 | A0-A3
Node 1: B0-B3 | B12-B15 | B8-B11 | B4-B7
Node 2: C12-C15 | C0-C3 | C4-C7 | C8-C11
Node 3: D8-D11 | D4-D7 | D0-D3 | D12-D15

**Step 3: Intra-node allreduce**

Node 0: A0-A15 | A0-A15 | A0-A15 | A0-A15
Node 1: B0-B15 | B0-B15 | B0-B15 | B0-B15
Node 2: C0-C15 | C0-C15 | C0-C15 | C0-C15
Node 3: D0-D15 | D0-D15 | D0-D15 | D0-D15

**Step 4: Inter-node data exchange**

Node 0: A0-A15 (NPU 3); B0-B15 (NPU 0); C0-C15 (NPU 1); D0-D15 (NPU 2)
Node 1: A0-A15 (NPU 4); B0-B15 (NPU 7); C0-C15 (NPU 6); D0-D15 (NPU 5)
Node 2: A0-A15 (NPU 8); B0-B15 (NPU 9); C0-C15 (NPU 11); D0-D15 (NPU 8)
Node 3: A0-A15 (NPU 14); B0-B15 (NPU 13); C0-C15 (NPU 12); D0-D15 (NPU 15)

**Step 5: Allgather**

Node 0:

| NPU 0 | NPU 1 | NPU 2 | NPU 3 |
|---|---|---|---|
| A0-A15 | A0-A15 | A0-A15 | A0-A15 |
| B0-B15 | B0-B15 | B0-B15 | B0-B15 |
| C0-C15 | C0-C15 | C0-C15 | C0-C15 |
| D0-D15 | D0-D15 | D0-D15 | D0-D15 |

Node 1:

| NPU 4 | NPU 5 | NPU 6 | NPU 7 |
|---|---|---|---|
| A0-A15 | A0-A15 | A0-A15 | A0-A15 |
| B0-B15 | B0-B15 | B0-B15 | B0-B15 |
| C0-C15 | C0-C15 | C0-C15 | C0-C15 |
| D0-D15 | D0-D15 | D0-D15 | D0-D15 |

Node 2:

| NPU 8 | NPU 9 | NPU 10 | NPU 11 |
|---|---|---|---|
| A0-A15 | A0-A15 | A0-A15 | A0-A15 |
| B0-B15 | B0-B15 | B0-B15 | B0-B15 |
| C0-C15 | C0-C15 | C0-C15 | C0-C15 |
| D0-D15 | D0-D15 | D0-D15 | D0-D15 |

Node 3:

| NPU 12 | NPU 13 | NPU 14 | NPU 15 |
|---|---|---|---|
| A0-A15 | A0-A15 | A0-A15 | A0-A15 |
| B0-B15 | B0-B15 | B0-B15 | B0-B15 |
| C0-C15 | C0-C15 | C0-C15 | C0-C15 |
| D0-D15 | D0-D15 | D0-D15 | D0-D15 |

FIG. 20

EP 4 446 881 A1

Node 0

NPU 0   NPU 1   NPU 2   NPU 3

Node 1

NPU 4   NPU 5   NPU 6   NPU 7

Node 2

NPU 8   NPU 9   NPU 10   NPU 11

Node 3

NPU 12   NPU 13   NPU 14   NPU 15

B0-B3

A0-A3

A4-A7

B4-B7

A8-A11

A12-A15

C0-C3

C4-C7

B8-B11

B12-B15

D0-D3

D4-D7

C8-C11

C12-C15

D8-D11

D12-D15

FIG. 21

FIG. 22

|       | NPU 0 | NPU 1 | NPU 2 | NPU 3 |
|-------|-------|-------|-------|-------|

First round
(Round 0)

Second
round
(Round 1)

Third round
(Round 2)

FIG. 23

EP 4 446 881 A1

|  | Node 0 |  |  | Node 1 |  |  | Node 2 |  |  | Node 3 |  |
|---|---|---|---|---|---|---|---|---|---|---|---|
| NPU 0 | NPU 1 | NPU 2 | NPU 3 | NPU 4 | NPU 5 | NPU 6 | NPU 7 | NPU 8 | NPU 9 | NPU 10 | NPU 11 |
| A0 | A1 | A2 | A3 | A4 | A5 | A6 | A7 | A8 | A9 | A10 | A11 |
| B0 | B1 | B2 | B3 | B4 | B5 | B6 | B7 | B8 | B9 | B10 | B11 |
| C0 | C1 | C2 | C3 | C4 | C5 | C6 | C7 | C8 | C9 | C10 | C11 |
| D0 | D1 | D2 | D3 | D4 | D5 | D6 | D7 | D8 | D9 | D10 | D11 |

**Step 1: Reduce-scatter**

| A0 | A1 | A2 | A3-A5 | | | | A6-A8 | | | | A9-A11 |
|---|---|---|---|---|---|---|---|---|---|---|---|
| B0-B2 | | | B3 | B4 | B5 | | | B6-B8 | | B9-B11 | |
| | C0-C2 | | | | C3-C5 | C6 | C7 | C8 | C9-C11 | | |
| | | D0-D2 | | D3-D5 | | D6-D8 | | | D9 | D10 | D11 |

**Step 2: Inter-node data exchange**

| A0/A3-A5 | A1/A6-A8 | A2/A9-A11 | | | | | | | | | |
|---|---|---|---|---|---|---|---|---|---|---|---|
| | | | B0-B2/B3 | B4/B9-B11 | B5/B6-B8 | | | | | | |
| | | | | | | C6/C9-C11 | C7/C0-C2 | C8/C3-C5 | | | |
| | | | | | | | | | D9/D6-D8 | D10/D3-D5 | D11/D0-D2 |

**Step 3: Intra-node allreduce**

| A0-A11 | A0-A11 | A0-A11 | | | | | | | | | |
|---|---|---|---|---|---|---|---|---|---|---|---|
| | | | B0-B11 | B0-B11 | B0-B11 | | | | | | |
| | | | | | | C0-C11 | C0-C11 | C0-C11 | | | |
| | | | | | | | | | D0-D11 | D0-D11 | D0-D11 |

**Step 4: Inter-node data exchange**

| A0-A11 | A0-A11 | A0-A11 | A0-A11 | | | | A0-A11 | | | | A0-A11 |
|---|---|---|---|---|---|---|---|---|---|---|---|
| B0-B11 | | | B0-B11 | B0-B11 | B0-B11 | | | B0-B11 | | B0-B11 | |
| | C0-C11 | | | | C0-C11 | C0-C11 | C0-C11 | C0-C11 | C0-C11 | | |
| | | D0-D11 | | D0-D11 | | D0-D11 | | | D0-D11 | D0-D11 | D0-D11 |

**Step 5: Allgather**

| A0-A11 | A0-A11 | A0-A11 | A0-A11 | A0-A11 | A0-A11 | A0-A11 | A0-A11 | A0-A11 | A0-A11 | A0-A11 | A0-A11 |
|---|---|---|---|---|---|---|---|---|---|---|---|
| B0-B11 | B0-B11 | B0-B11 | B0-B11 | B0-B11 | B0-B11 | B0-B11 | B0-B11 | B0-B11 | B0-B11 | B0-B11 | B0-B11 |
| C0-C11 | C0-C11 | C0-C11 | C0-C11 | C0-C11 | C0-C11 | C0-C11 | C0-C11 | C0-C11 | C0-C11 | C0-C11 | C0-C11 |
| D0-D11 | D0-D11 | D0-D11 | D0-D11 | D0-D11 | D0-D11 | D0-D11 | D0-D11 | D0-D11 | D0-D11 | D0-D11 | D0-D11 |

FIG. 24

**Node 0**

| NPU 0 | NPU 1 | NPU 2 | NPU 3 | NPU 4 | NPU 5 |
|---|---|---|---|---|---|
| A0 | A1 | A2 | A3 | A4 | A5 |
| B0 | B1 | B2 | B3 | B4 | B5 |
| C0 | C1 | C2 | C3 | C4 | C5 |
| D0 | D1 | D2 | D3 | D4 | D5 |
| E0 | E1 | E2 | E3 | E4 | E5 |
| F0 | F1 | F2 | F3 | F4 | F5 |

**Node 1**

| NPU 6 | NPU 7 | NPU 8 | NPU 9 | NPU 10 | NPU 11 |
|---|---|---|---|---|---|
| A6 | A7 | A8 | A9 | A10 | A11 |
| B6 | B7 | B8 | B9 | B10 | B11 |
| C6 | C7 | C8 | C9 | C10 | C11 |
| D6 | D7 | D8 | D9 | D10 | D11 |
| E6 | E7 | E8 | E9 | E10 | E11 |
| F6 | F7 | F8 | F9 | F10 | F11 |

**Node 2**

| NPU 12 | NPU 13 | NPU 14 | NPU 15 | NPU16 | NPU17 |
|---|---|---|---|---|---|
| A12 | A13 | A14 | A15 | A16 | A17 |
| B12 | B13 | B14 | B15 | B16 | B17 |
| C12 | C13 | C14 | C15 | C16 | C17 |
| D12 | D13 | D14 | D15 | D16 | D17 |
| E12 | E13 | E14 | E15 | E16 | E17 |
| F12 | F13 | F14 | F15 | F16 | F17 |

**Step 1: Reduce-scatter**

Node 0: A0-A5, B0-B5, C0-C5, D0-D5, E0-E5, F0-F5

Node 1: A6-A11, B6-B11, C6-C11, D6-D11, E6-E11, F6-F11

Node 2: A12-A17, B12-B17, C12-C17, D12-D17, E12-E17, F12-F17

**Step 2: Inter-node data exchange**

Node 0: A6-A11 | A12-A17 | A0-A5 ; D6-D11 | D12-D17 | D0-D5

Node 1: B0-B5 | B6-B11 | B12-B17 ; E0-E5 | E6-E11 | E12-E17

Node 2: C12-C17 | C0-C5 | C6-C11 ; F12-F17 | F0-F5 | F6-F11

**Step 3: Intra-node allreduce**

Node 0: A0-A17 | A0-A17 | A0-A17 ; D0-D17 | D0-D17 | D0-D17

Node 1: B0-B17 | B0-B17 | B0-B17 ; E0-E17 | E0-E17 | E0-E17

Node 2: C0-C17 | C0-C17 | C0-C17 ; F0-F17 | F0-F17 | F0-F17

**Step 4: Inter-node data exchange**

Node 0: A0-A17, B0-B17, C0-C17, D0-D17, E0-E17, F0-F17

Node 1: A0-A17, B0-B17, C0-C17, D0-D17, E0-E17, F0-F17

Node 2: A0-A17, B0-B17, C0-C17, D0-D17, E0-E17, F0-F17

**Step 5: Allgather**

| Node 0 | | | | | | Node 1 | | | | | | Node 2 | | | | | |
|---|---|---|---|---|---|---|---|---|---|---|---|---|---|---|---|---|---|
| A0-A17 | A0-A17 | A0-A17 | A0-A17 | A0-A17 | A0-A17 | A0-A17 | A0-A17 | A0-A17 | A0-A17 | A0-A17 | A0-A17 | A0-A17 | A0-A17 | A0-A17 | A0-A17 | A0-A17 | A0-A17 |
| B0-B17 | B0-B17 | B0-B17 | B0-B17 | B0-B17 | B0-B17 | B0-B17 | B0-B17 | B0-B17 | B0-B17 | B0-B17 | B0-B17 | B0-B17 | B0-B17 | B0-B17 | B0-B17 | B0-B17 | B0-B17 |
| C0-C17 | C0-C17 | C0-C17 | C0-C17 | C0-C17 | C0-C17 | C0-C17 | C0-C17 | C0-C17 | C0-C17 | C0-C17 | C0-C17 | C0-C17 | C0-C17 | C0-C17 | C0-C17 | C0-C17 | C0-C17 |
| D0-D17 | D0-D17 | D0-D17 | D0-D17 | D0-D17 | D0-D17 | D0-D17 | D0-D17 | D0-D17 | D0-D17 | D0-D17 | D0-D17 | D0-D17 | D0-D17 | D0-D17 | D0-D17 | D0-D17 | D0-D17 |
| E0-E17 | E0-E17 | E0-E17 | E0-E17 | E0-E17 | E0-E17 | E0-E17 | E0-E17 | E0-E17 | E0-E17 | E0-E17 | E0-E17 | E0-E17 | E0-E17 | E0-E17 | E0-E17 | E0-E17 | E0-E17 |
| F0-F17 | F0-F17 | F0-F17 | F0-F17 | F0-F17 | F0-F17 | F0-F17 | F0-F17 | F0-F17 | F0-F17 | F0-F17 | F0-F17 | F0-F17 | F0-F17 | F0-F17 | F0-F17 | F0-F17 | F0-F17 |

FIG. 25

EP 4 446 881 A1

**Node 0**

| NPU 0 | NPU 1 | NPU 2 | NPU 3 | NPU 4 |
|---|---|---|---|---|
| A0 | A1 | A2 | A3 | A4 |
| B0 | B1 | B2 | B3 | B4 |
| C0 | C1 | C2 | C3 | C4 |
| D0 | D1 | D2 | D3 | D4 |
| E0 | E1 | E2 | E3 | E4 |

**Node 1**

| NPU 5 | NPU 6 | NPU 7 | NPU 8 | NPU 9 |
|---|---|---|---|---|
| A5 | A6 | A7 | A8 | A9 |
| B5 | B6 | B7 | B8 | B9 |
| C5 | C6 | C7 | C8 | C9 |
| D5 | D6 | D7 | D8 | D9 |
| E5 | E6 | E7 | E8 | E9 |

**Node 2**

| NPU 10 | NPU 11 | NPU 12 | NPU 13 | NPU 14 |
|---|---|---|---|---|
| A10 | A11 | A12 | A13 | A14 |
| B10 | B11 | B12 | B13 | B14 |
| C10 | C11 | C12 | C13 | C14 |
| D10 | D11 | D12 | D13 | D14 |
| E10 | E11 | E12 | E13 | E14 |

**Step 1: Reduce-scatter**

Node 0: A0-A4 (NPU 3); B0-B4 (NPU 0); C0-C4 (NPU 2); D0-D4 (NPU 3); E0-E4 (NPU 0)

Node 1: A5-A9 (NPU 5); B5-B9 (NPU 8); C5-C9 (NPU 7); D5-D9 (NPU 5); E5-E9 (NPU 8)

Node 2: A10-A14 (NPU 10); B10-B14 (NPU 11); C10-C14 (NPU 12); D10-D14 (NPU 10); E10-E14 (NPU 11)

**Step 2: Inter-node data exchange**

Node 0: A5-A9, A10-A14 (NPU 0, 1); A0-A4 (NPU 3); D5-D9, D10-D14 (NPU 0, 1); D0-D4 (NPU 3)

Node 1: B0-B4 (NPU 5); B10-B14, B5-B9 (NPU 7, 8); E0-E4 (NPU 5); E10-E14, E5-E9 (NPU 7, 8)

Node 2: C0-C4, C5-C9, C10-C14 (NPU 11, 12, 13)

**Step 3: Intra-node allreduce**

Node 0: A0-A14, A0-A14 (NPU 0, 1); A0-A14 (NPU 3); D0-D14, D0-D14 (NPU 0, 1); D0-D14 (NPU 3)

Node 1: B0-B14 (NPU 5); B0-B14, B0-B14 (NPU 7, 8); E0-E14 (NPU 5); E0-E14, E0-E14 (NPU 7, 8)

Node 2: C0-C14, C0-C14, C0-C14 (NPU 11, 12, 13)

**Step 4: Inter-node data exchange**

Node 0: A0-A14 (NPU 3); B0-B14 (NPU 0); C0-C14 (NPU 2); D0-D14 (NPU 3); E0-E14 (NPU 0)

Node 1: A0-A14 (NPU 5); B0-B14 (NPU 8); C0-C14 (NPU 7); D0-D14 (NPU 5); E0-E14 (NPU 8)

Node 2: A0-A14 (NPU 10); B0-B14 (NPU 11); C0-C14 (NPU 12); D0-D14 (NPU 10); E0-E14 (NPU 11)

**Step 5: Allgather**

Node 0:

| NPU 0 | NPU 1 | NPU 2 | NPU 3 | NPU 4 |
|---|---|---|---|---|
| A0-A14 | A0-A14 | A0-A14 | A0-A14 | A0-A14 |
| B0-B14 | B0-B14 | B0-B14 | B0-B14 | B0-B14 |
| C0-C14 | C0-C14 | C0-C14 | C0-C14 | C0-C14 |
| D0-D14 | D0-D14 | D0-D14 | D0-D14 | D0-D14 |
| E0-E14 | E0-E14 | E0-E14 | E0-E14 | E0-E14 |

Node 1:

| NPU 5 | NPU 6 | NPU 7 | NPU 8 | NPU 9 |
|---|---|---|---|---|
| A0-A14 | A0-A14 | A0-A14 | A0-A14 | A0-A14 |
| B0-B14 | B0-B14 | B0-B14 | B0-B14 | B0-B14 |
| C0-C14 | C0-C14 | C0-C14 | C0-C14 | C0-C14 |
| D0-D14 | D0-D14 | D0-D14 | D0-D14 | D0-D14 |
| E0-E14 | E0-E14 | E0-E14 | E0-E14 | E0-E14 |

Node 2:

| NPU 10 | NPU 11 | NPU 12 | NPU 13 | NPU 14 |
|---|---|---|---|---|
| A0-A14 | A0-A14 | A0-A14 | A0-A14 | A0-A14 |
| B0-B14 | B0-B14 | B0-B14 | B0-B14 | B0-B14 |
| C0-C14 | C0-C14 | C0-C14 | C0-C14 | C0-C14 |
| D0-D14 | D0-D14 | D0-D14 | D0-D14 | D0-D14 |
| E0-E14 | E0-E14 | E0-E14 | E0-E14 | E0-E14 |

FIG. 26

Total time required
for allreduce

| t1 | t2 | t3 | t4 | t5 |

(a)

Total time required
for allreduce

| t1 | t2–1 | t3–1 | t4–1 | | t5 |

| | | t2–2 | t3–2 | t4–2 | |

(b)

FIG. 27

First node

First NPU    Second NPU

Second node

Third NPU

2801: Divide first original data into M × N portions of data, and use the $((I-1) \times N + 1)^{th}$ portion of data to the $(I \times N)^{th}$ portion of data as first data

2802: Determine the second node based on the first data

2803: Determine, from N NPUs included in the first node based on an inter-node connection relationship and the second node, the second NPU connected to the second node

2804: Send the first data

2805: Obtain an intra-node aggregation result 1 based on the first data, where the intra-node aggregation result 1 includes the first data

2806: Send the intra-node aggregation result 1

2807: Perform an intra-node alltoall operation with another NPU in the second node based on the intra-node aggregation result 1

FIG. 28

| Node 0 | | | | Node 1 | | | | Node 2 | | | | Node 3 | | | |
|---|---|---|---|---|---|---|---|---|---|---|---|---|---|---|---|
| NPU 0 | NPU 1 | NPU 2 | NPU 3 | NPU 4 | NPU 5 | NPU 6 | NPU 7 | NPU 8 | NPU 9 | NPU 10 | NPU 11 | NPU 12 | NPU 13 | NPU 14 | NPU 15 |
| A0 | A1 | A2 | A3 | A4 | A5 | A6 | A7 | A8 | A9 | A10 | A11 | A12 | A13 | A14 | A15 |
| B0 | B1 | B2 | B3 | B4 | B5 | B6 | B7 | B8 | B9 | B10 | B11 | B12 | B13 | B14 | B15 |
| C0 | C1 | C2 | C3 | C4 | C5 | C6 | C7 | C8 | C9 | C10 | C11 | C12 | C13 | C14 | C15 |
| D0 | D1 | D2 | D3 | D4 | D5 | D6 | D7 | D8 | D9 | D10 | D11 | D12 | D13 | D14 | D15 |
| E0 | E1 | E2 | E3 | E4 | E5 | E6 | E7 | E8 | E9 | E10 | E11 | E12 | E13 | E14 | E15 |
| F0 | F1 | F2 | F3 | F4 | F5 | F6 | F7 | F8 | F9 | F10 | F11 | F12 | F13 | F14 | F15 |
| G0 | G1 | G2 | G3 | G4 | G5 | G6 | G7 | G8 | G9 | G10 | G11 | G12 | G13 | G14 | G15 |
| H0 | H1 | H2 | H3 | H4 | H5 | H6 | H7 | H8 | H9 | H10 | H11 | H12 | H13 | H14 | H15 |
| I0 | I1 | I2 | I3 | I4 | I5 | I6 | I7 | I8 | I9 | I10 | I11 | I12 | I13 | I14 | I15 |
| J0 | J1 | J2 | J3 | J4 | J5 | J6 | J7 | J8 | J9 | J10 | J11 | J12 | J13 | J14 | J15 |
| K0 | K1 | K2 | K3 | K4 | K5 | K6 | K7 | K8 | K9 | K10 | K11 | K12 | K13 | K14 | K15 |
| L0 | L1 | L2 | L3 | L4 | L5 | L6 | L7 | L8 | L9 | L10 | L11 | L12 | L13 | L14 | L15 |
| M0 | M1 | M2 | M3 | M4 | M5 | M6 | M7 | M8 | M9 | M10 | M11 | M12 | M13 | M14 | M15 |
| N0 | N1 | N2 | N3 | N4 | N5 | N6 | N7 | N8 | N9 | N10 | N11 | N12 | N13 | N14 | N15 |
| O0 | O1 | O2 | O3 | O4 | O5 | O6 | O7 | O8 | O9 | O10 | O11 | O12 | O13 | O14 | O15 |
| P0 | P1 | P2 | P3 | P4 | P5 | P6 | P7 | P8 | P9 | P10 | P11 | P12 | P13 | P14 | P15 |

**Step 1: Intra-node alltoall**

| E0 | I0 | M0 | A0 | A4 | M4 | I4 | E4 | M8 | A8 | E8 | I8 | I12 | E12 | A12 | M12 |
|---|---|---|---|---|---|---|---|---|---|---|---|---|---|---|---|
| F0 | J0 | N0 | B0 | B4 | N4 | J4 | F4 | N8 | B8 | F8 | J8 | J12 | F12 | B12 | N12 |
| G0 | K0 | O0 | C0 | C4 | O4 | K4 | G4 | O8 | C8 | G8 | K8 | K12 | G12 | C12 | O12 |
| H0 | L0 | P0 | D0 | D4 | P4 | L4 | H4 | P8 | D8 | H8 | L8 | L12 | H12 | D12 | P12 |
| E1 | I1 | M1 | A1 | A5 | M5 | I5 | E5 | M9 | A9 | E9 | I9 | I13 | E13 | A13 | M13 |
| F1 | J1 | N1 | B1 | B5 | N5 | J5 | F5 | N9 | B9 | F9 | J9 | J13 | F13 | B13 | N13 |
| G1 | K1 | O1 | C1 | C5 | O5 | K5 | G5 | O9 | C9 | G9 | K9 | K13 | G13 | C13 | O13 |
| H1 | L1 | P1 | D1 | D5 | P5 | L5 | H5 | P9 | D9 | H9 | L9 | L13 | H13 | D13 | P13 |
| E2 | I2 | M2 | A2 | A6 | M6 | I6 | E6 | M10 | A10 | E10 | I10 | I14 | E14 | A14 | M14 |
| F2 | J2 | N2 | B2 | B6 | N6 | J6 | F6 | N10 | B10 | F10 | J10 | J14 | F14 | B14 | N14 |
| G2 | K2 | O2 | C2 | C6 | O6 | K6 | G6 | O10 | C10 | G10 | K10 | K14 | G14 | C14 | O14 |
| H2 | L2 | P2 | D2 | D6 | P6 | L6 | H6 | P10 | D10 | H10 | L10 | L14 | H14 | D14 | P14 |
| E3 | I3 | M3 | A3 | A7 | M7 | I7 | E7 | M11 | A11 | E11 | I11 | I15 | E15 | A15 | M15 |
| F3 | J3 | N3 | B3 | B7 | N7 | J7 | F7 | N11 | B11 | F11 | J11 | J15 | F15 | B15 | N15 |
| G3 | K3 | O3 | C3 | C7 | O7 | K7 | G7 | O11 | C11 | G11 | K11 | K15 | G15 | C15 | O15 |
| H3 | L3 | P3 | D3 | D7 | P7 | L7 | H7 | P11 | D11 | H11 | L11 | L15 | H15 | D15 | P15 |

~

TO FIG. 29B

FIG. 29A

## CONT. FROM FIG. 29A

**Step 2: Inter-node data exchange**

| A4 | A8 | A12 | A0 | E0 | E12 | E8 | E4 | I12 | I0 | I4 | I8 | M8 | M4 | M0 | M12 |
|---|---|---|---|---|---|---|---|---|---|---|---|---|---|---|---|
| B4 | B8 | B12 | B0 | F0 | F12 | F8 | F4 | J12 | J0 | J4 | J8 | N8 | N4 | N0 | N12 |
| C4 | C8 | C12 | C0 | G0 | G12 | G8 | G4 | K12 | K0 | K4 | K8 | O8 | O4 | O0 | O12 |
| D4 | D8 | D12 | D0 | H0 | H12 | H8 | H4 | L12 | L0 | L4 | L8 | P8 | P4 | P0 | P12 |
| A5 | A9 | A13 | A1 | E1 | E13 | E9 | E5 | I13 | I1 | I5 | I9 | M9 | M5 | M1 | M13 |
| B5 | B9 | B13 | B1 | F1 | F13 | F9 | F5 | J13 | J1 | J5 | J9 | N9 | N5 | N1 | N13 |
| C5 | C9 | C13 | C1 | G1 | G13 | G9 | G5 | K13 | K1 | K5 | K9 | O9 | O5 | O1 | O13 |
| D5 | D9 | D13 | D1 | H1 | H13 | H9 | H5 | L13 | L1 | L5 | L9 | P9 | P5 | P1 | P13 |
| A6 | A10 | A14 | A2 | E2 | E14 | E10 | E6 | I14 | I2 | I6 | I10 | M10 | M6 | M2 | M14 |
| B6 | B10 | B14 | B2 | F2 | F14 | F10 | F6 | J14 | J2 | J6 | J10 | N10 | N6 | N2 | N14 |
| C6 | C10 | C14 | C2 | G2 | G14 | G10 | G6 | K14 | K2 | K6 | K10 | O10 | O6 | O2 | O14 |
| D6 | D10 | D14 | D2 | H2 | H14 | H10 | H6 | L14 | L2 | L6 | L10 | P10 | P6 | P2 | P14 |
| A7 | A11 | A15 | A3 | E3 | E15 | E11 | E7 | I15 | I3 | I7 | I11 | M11 | M7 | M3 | M15 |
| B7 | B11 | B15 | B3 | F3 | F15 | F11 | F7 | J15 | J3 | J7 | J11 | N11 | N7 | N3 | N15 |
| C7 | C11 | C15 | C3 | G3 | G15 | G11 | G7 | K15 | K3 | K7 | K11 | O11 | O7 | O3 | O15 |
| D7 | D11 | D15 | D3 | H3 | H15 | H11 | H7 | L15 | L3 | L7 | L11 | P11 | P7 | P3 | P15 |

**Step 3: Intra-node alltoall**

| A0 | B0 | C0 | D0 | E0 | F0 | G0 | H0 | I0 | J0 | K0 | L0 | M0 | N0 | O0 | P0 |
|---|---|---|---|---|---|---|---|---|---|---|---|---|---|---|---|
| A1 | B1 | C1 | D1 | E1 | F1 | G1 | H1 | I1 | J1 | K1 | L1 | M1 | N1 | O1 | P1 |
| A2 | B2 | C2 | D2 | E2 | F2 | G2 | H2 | I2 | J2 | K2 | L2 | M2 | N2 | O2 | P2 |
| A3 | B3 | C3 | D3 | E3 | F3 | G3 | H3 | I3 | J3 | K3 | L3 | M3 | N3 | O3 | P3 |
| A4 | B4 | C4 | D4 | E4 | F4 | G4 | H4 | I4 | J4 | K4 | L4 | M4 | N4 | O4 | P4 |
| A5 | B5 | C5 | D5 | E5 | F5 | G5 | H5 | I5 | J5 | K5 | L5 | M5 | N5 | O5 | P5 |
| A6 | B6 | C6 | D6 | E6 | F6 | G6 | H6 | I6 | J6 | K6 | L6 | M6 | N6 | O6 | P6 |
| A7 | B7 | C7 | D7 | E7 | F7 | G7 | H7 | I7 | J7 | K7 | L7 | M7 | N7 | O7 | P7 |
| A8 | B8 | C8 | D8 | E8 | F8 | G8 | H8 | I8 | J8 | K8 | L8 | M8 | N8 | O8 | P8 |
| A9 | B9 | C9 | D9 | E9 | F9 | G9 | H9 | I9 | J9 | K9 | L9 | M9 | N9 | O9 | P9 |
| A10 | B10 | C10 | D10 | E10 | F10 | G10 | H10 | I10 | J10 | K10 | L10 | M10 | N10 | O10 | P10 |
| A11 | B11 | C11 | D11 | E11 | F11 | G11 | H11 | I11 | J11 | K11 | L11 | M11 | N11 | O11 | P11 |
| A12 | B12 | C12 | D12 | E12 | F12 | G12 | H12 | I12 | J12 | K12 | L12 | M12 | N12 | O12 | P12 |
| A13 | B13 | C13 | D13 | E13 | F13 | G13 | H13 | I13 | J13 | K13 | L13 | M13 | N13 | O13 | P13 |
| A14 | B14 | C14 | D14 | E14 | F14 | G14 | H14 | I14 | J14 | K14 | L14 | M14 | N14 | O14 | P14 |
| A15 | B15 | C15 | D15 | E15 | F15 | G15 | H15 | I15 | J15 | K15 | L15 | M15 | N15 | O15 | P15 |

FIG. 29B

**INTERNATIONAL SEARCH REPORT**

| International application No. |
|---|
| **PCT/CN2023/071103** |

**A.  CLASSIFICATION OF SUBJECT MATTER**

G06F9/445(2018.01)i

According to International Patent Classification (IPC) or to both national classification and IPC

**B.  FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT, ENTXTC, DWPI: 处理器, 两, 多, 分布式, 计算, 集群, 节点, 组内, 组间, 节点间, 节点内, 聚合, CPU, GPU, HPC, NPU, OXC, distributed, two, multiple, computing, cluster, node, group, between, inside, aggregation

**C.  DOCUMENTS CONSIDERED TO BE RELEVANT**

| Category* | Citation of document, with indication, where appropriate, of the relevant passages | Relevant to claim No. |
|---|---|---|
| X | US 2019205146 A1 (INTERNATIONAL BUSINESS MACHINES CORPORATION) 04 July 2019 (2019-07-04)<br>description, paragraphs [0017]-[0053] | 1-2, 8-9, 15-16, 22 |
| A | US 2020342297 A1 (HUAWEI TECHNOLOGIES CO., LTD.) 29 October 2020 (2020-10-29)<br>entire document | 1-22 |
| A | CN 111612167 A (JD DIGITS TECHNOLOGY HOLDING CO., LTD.) 01 September 2020 (2020-09-01)<br>entire document | 1-22 |
| A | CN 112235344 A (SHANGHAI UNIVERSITY) 15 January 2021 (2021-01-15)<br>entire document | 1-22 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 June 2023** | **07 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/071103**

| Patent document cited in search report | | | Publication date (day/month/year) | Patent family member(s) | | | Publication date (day/month/year) |
|---|---|---|---|---|---|---|---|
| US | 2019205146 | A1 | 04 July 2019 | US | 2019361715 | A1 | 28 November 2019 |
| US | 2020342297 | A1 | 29 October 2020 | EP | 3734516 | A1 | 04 November 2020 |
| | | | | WO | 2019137416 | A1 | 18 July 2019 |
| | | | | CN | 110033078 | A | 19 July 2019 |
| CN | 111612167 | A | 01 September 2020 | | None | | |
| CN | 112235344 | A | 15 January 2021 | | None | | |

Form PCT/ISA/210 (patent family annex) (July 2022)

**EP 4 446 881 A1**

**REFERENCES CITED IN THE DESCRIPTION**

**Patent documents cited in the description**

- CN 202210041814
- CN 202210254471X